(19) Europäisches Patentamt
European Patent Office
Office européen des brevets

(11) **EP 4 407 287 A1**

(12) **EUROPEAN PATENT APPLICATION**

(43) Date of publication:
**31.07.2024 Bulletin 2024/31**

(21) Application number: **23305117.6**

(22) Date of filing: **30.01.2023**

(51) International Patent Classification (IPC):
**G01J 9/02** *(2006.01)*    **G01J 4/04** *(2006.01)*

(52) Cooperative Patent Classification (CPC):
**G01J 4/04; G01J 9/0215;** G01J 2009/0203;
G01J 2009/0219; G01J 2009/0234;
G01J 2009/0261; G01J 2009/0265;
G01J 2009/0284; G01J 2009/0288

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Université Paris Cité**
  **75006 Paris (FR)**
• **Centre national de la recherche scientifique**
  **75016 Paris (FR)**
• **Ecole Centrale de Marseille**
  **13013 Marseille (FR)**

(72) Inventors:
• **BERTO, Pascal**
  **75019 PARIS (FR)**
• **BLOCHET, Baptiste**
  **94300 VINCENNES (FR)**
• **ALONSO GONZALEZ, Miguel Angel**
  **13007 MARSEILLE (FR)**
• **GUILLON, Marc**
  **78000 VERSAILLES (FR)**

(74) Representative: **Cabinet Nony**
**11 rue Saint-Georges**
**75009 Paris (FR)**

Remarks:
Claim 26 is deemed to be abandoned due to non-payment of the claims fee (Rule 45(3) EPC).

(54) **POLARIMETRIC PHASE IMAGING**

(57)    A method for generating data related at least to the polarization state and the polarization rate, and advantageously to the wavefront shapes, of an incident light beam (51) of any polarization state and any polarization rate, from a single intensity image acquisition $I_{sensor}$ of said light beam (51), using a polarization and wavefront shape imaging system (1) which comprises a polarization modulating mask (2) being a diffractive optical element, and an intensity sensor camera (3), the method comprising :

(A) having previously recorded one set of at least four reference intensity patterns (N1),

(B) recording the single intensity image $I_{sensor}$ of said incident light beam (51),

(C) processing the single intensity image $I_{sensor}$ based on the reference intensity patterns to generate the data related to the polarization state and the polarization rate, and advantageously to the wavefront shapes of the incident light beam (51).

Fig. 1

EP 4 407 287 A1

## Description

### Field of the invention

The present invention relates to a method for the polarimetric and the wavefront characterizations of a light beam and to a related system.

### Prior art

An optical light beam is defined by its intensity, its wavelength (or spectrum), its phase, and its polarization state. Because of the fast oscillation of optical light, any optical detector (such as cameras or human eyes) can only measure intensity. Any other light parameters (spectrum, phase, polarization state) can only be obtained by combining intensity detectors to other optical devices. Neither camera sensors or the eyes are sensitive to the polarization state of light.

### Wavefront sensors

Typical wavefront sensors measure the wavefront (or the "spatial phase") of a beam by placing a so-called "Hartmann mask" before an intensity camera. The role of the Hartmann mask is to encode a phase information into an intensity modulation.

Measuring the spatial phase of a beam finds applications in many fields ranging from optics and laser metrology to quantitative imaging of biological samples and even complex optical fields, for example nanoparticle tracking in super-resolution microscopy.

EP20305898 describes a method for analysing the wavefront-gradient data of a light beam, notably measured using a wavefront sensor, the light beam containing at least one optical vortex, in order to estimate the contribution of the optical vortices to the wavefront.

EP20705986 and EP20306121 describe measuring several wavefronts simultaneously allowing measuring the spectral wavefront, which means the spatial phase at each wavelength of the beam spectrum. Simultaneous multiplexed hyper-spectral measurement is not only practical but is mandatory in some applications such as ultrashort laser metrology and no technology has been commercialized so far.

### Polarization imaging

The polarization state of a beam corresponds to the geometry with which the vector electric field oscillates. The polarization state of a beam is defined by the oscillation amplitude in two orthogonal directions together with their relative phase. The full determination of the polarization state of a beam requires at least four intensity measurements. The polarization state of a beam is fully defined by so-called "Stokes' parameters": $S_0$ (the beam intensity), $S_1$, $S_2$ and $S_3$ (handedness and eccentricity of elliptic polarization).

The polarization state of a light beam gives information about symmetry breaking at the molecular and micrometric scales: structures with specific orientations (or chirality) will interact differently for two orthogonal linear (resp. circular) polarized beams. It also allows characterizing the material and the surface structure of objects onto which the light is reflected. This possibility has been investigated for target recognition applications.

Polarization imaging finds applications in meteorology and marine biology. The density and nature of small scattering particles such as in clouds or micro-organisms in water can be characterized by measuring the polarization state of transmitted or back-scattered light. Polarization imaging also find applications for monitoring surface corrosion and non-invasive damage inspection. In biology or chemistry, polarized spectroscopy can be used to characterize inorganic molecules and particles.

Camera sensors (e.g. Sony IMX250MZR, IMX253MZR) already exist to measure the polarization state of a beam, but their measure is incomplete and sacrifice half the impinging energy. They can almost completely measure the 4 Stokes parameters for a fully polarized beam, only the sign of S3 remains undetermined. The determination of the handedness of circular polarization, sign of S3, is of critical importance to study circular birefringence of materials, associated with molecules chirality. Furthermore, S3 remains completely undetermined for partially polarized beams. Consequently, in this case, both the rate of polarization "p" and the handedness of the polarization state are unknown. Such sensors could be trivially combined to Hartmann masks to provide the wavefront of the beam in addition to the incomplete polarization state.

Polarimetry also finds a large amount of applications to measure the Mueller matrix in biology or agriculture, as described in the article Ignatenko, D. (2022). Applications of Mueller Matrix Polarimetry to Biological and Agricultural Diagnostics: A Review. Appl. Sci., 12(10), pp. 5258. The Mueller matrix M indeed, relates the Stokes vector $S_{out}$ containing

all four Stokes parameters (S0, S1, S2, S3) of the outgoing light beam to the Stokes vector $S_{in}$ of the impinging beam according to $S_{out} = M*S_{in}$, and thus involve a rich content about the tissue. Mueller matrix polarimetry typically demands a polarization state generator for the impinging beam and a polarization state analyser for the outgoing beam.

A beam can be fully polarized, in which case Stokes parameters satisfy: $S_0 = \sqrt{S_1^2 + S_2^2 + S_3^2}$ . A beam can also be fully non-polarized in which case $S_1 = S_2 = S_3 = 0$ although $S_0 \neq 0$. The most general case is a partially polarized beam for which the rate of polarization is $p = \dfrac{\sqrt{s_1^2 + s_2^2 + s_3^2}}{s_0}$ .

Hereafter, a depolarizing mask is defined as a mask which induces a spatial modulation of the polarization state of an input beam, this polarization-change so depending on the location of the input beam on the mask. Ideally, this mask should have a transmission coefficient of 1 and should modulate 100% of the input beam. For a fully polarized input beam, the output beam may then be locally either fully polarized, partially polarized or fully non-polarized.

**Polarimetric phase imaging**

In biology and biomedical applications, biological cells are mostly transparent, meaning that the optical information is chiefly encoded in the phase and the polarization state of the beam.

High-resolution phase imaging based on wavefront sensor technologies allows making quantitative phase imaging a simple plug-in device for biologists, so making it compatible with constrained biological environments. Aknoun, S. (2015) discloses quantitative retardance imaging of biological samples using quadriwave lateral shearing interferometry. Optics Express, 23(12), pp. 16383-16406, describes multi-shots phase and polarization imaging of cells thanks to a high-resolution wavefront imager which considerably simplifies the measurement. However, polarization characterization still requires a quite complex optical illumination and detection system as well as a set of several measurements. The complexity of polarimetric measurements still demands opticians to design optical systems, thus hindering spreading among biologists. Potentialities of imaging polarization contrast is thus under-used in this community although potentially providing a non-invasive label-free contrast ability in many situations.

Yet, quantitative phase imaging has been demonstrated to be highly sensitive to dry mass changes within living cells resulting from refractive index changes with protein concentration. Besides, molecular orientation and thus molecular crowding can be efficiently studied at the nanometric scale in cells thanks to polarized single-molecule localization microscopy, as describes by Shaban, H.A., Valades-Cruz, C.A., Savatier, J. and al. Polarized super-resolution structural imaging inside amyloid fibrils using Thioflavine T. Sci Rep 7, 12482 (2017).

In addition, molecular structuring at the nanoscopic level is intrinsically associated with detectable optical anisotropy, even without any labelling. Through molecular structuring, nano-morphological properties of proteins induce significant light wave delays and polarization changes when light is transmitted through or reflected on such structures. For this reason, polarimetric imaging is also a well-established technique in biological and biomedical imaging, as described in Massoumian, F. (2003) Quantitative polarized light microscopy. Journal of Microscopy, 209 (1), and Ramella-Roman, J. (2020) A review of polarization-based imaging technologies for clinical and preclinical applications. Journal of Optics, 22 (12).

In medicine, phase and polarization imaging are used for diagnosis. For example, bone narrow disorder can be identified by finding amyloid plaque detection in histological slides of cardiac tissue, as described in Dai, X. (2022). Quantitative Jones matrix imaging using vectorial Fourier ptychography. Biomedical Optics Express, 13 (3), pp. 1457-1470. Song, S. (2021). Large-Area, High-Resolution Birefringence Imaging with Polarization-Sensitive Fourier Ptychographic Microscopy. ACS Photonics, 8 (1), pp. 158-165 describes parasite infection in red blood cells generating hemozoin crystal that can be detected with phase and polarization imaging. Similarly, some genetic disorders such as cystinosis induced some protein aggregates that exhibits specific polarization and phase profile , as described in Cherqui, S. (2017) The renal Fanconi syndrome in cystinosis: pathogenic insights and therapeutic perspectives. Nat Rev Nephrol., 13 (2), pp. 115-131.

Simultaneous measurement of the phase and the polarization state of light can be used to characterize the properties of anisotropic nanoparticles or chiral metamaterial devices. For telecommunication, vectorial beams with orbital angular momentum are used for free space tele-communication and could be characterized and sorted out thanks to polarized wavefront sensing. For fibered telecommunication, the full characterization of multimode fibers requires the measurement of phase, polarization, and intensity information.

The system proposed by Yang, Z., Wang, Z., Wang, Y. et al. Generalized Hartmann-Shack array of dielectric metalens sub-arrays for polarimetric beam profiling. Nat Commun 9, 4607 (2018), consists in designing micro-lenses with a metasurface to mimic polarization sensitive micro-lenses with a principle identical to the Hartmann-Shack wavefront sensor. This system thus splits the impinging beam into beamlets, each beamlet passing through a meta micro-lens. In more details, the system comprises a unit-cell array of 6 metasurface microlenses focusing 6 different polarization states on a camera sensor (Noteworthy, equivalent results could have been obtained using only 4 metasurface micro-lenses per unit-cell). The relative ratios of these foci are directly related to the polarization state of the incoming electric field and the displacements of these foci are related to the wavefront gradient of the incoming field.

The retrieval of one measurement of both the local polarization state and the wavefront of the beam is achieved within one entire unit-cell containing the 6 metasurface microlenses. The distance between the mask and the camera plane is fixed and dictated by the focal length of the metalenses and the magnification between the mask and the camera is dictated by the size of the foci generated by the microlenses (which must equal the camera pixel size). The cost in terms of number of camera pixels per sampling point is very high because the distance between each sampling point (each focus) equals the size of the unit cell. The required number of camera pixels per sampling point thus scales as the ratio between the focus surface and the microlens surface: 1350 camera pixels are necessary to get 1 sampling point. It is difficult with such a system to achieve a high-resolution mapping of phase and polarization because it would demand cameras with a huge number of pixels. It should also be pointed-out that metallic metasurfaces are more efficient in the near infrared range (around 1.5 um) than in the visible range both because of the resonant structure size scale with the wavelength and because matter absorbs more at shorter wavelengths, especially at resonance. Such a system is thus not well adapted for visible light.

Some already existing sensors can almost completely measure the 4 Stokes parameters for a fully polarized beams, as only the sign of $S_3$ remains undetermined. However, $S_3$ remains completely undetermined for partially polarized beam. Consequently, in this latter case, both the rate of polarization and the handedness of the polarization state are unknown. Noteworthy, the case of partially polarized beams is especially relevant for imaging applications since the use of laser sources in this case yields many interference phenomena degrading the image quality. Broadband light sources are thus typically prefered in this case for which the degree of polarization may degrade when propagating through birefringent materials. These sensors are thus not optimized for quantitative polarimetric imaging applications.

Another existing high-resolution wavefront sensor combined with an active control of the polarization state of the illumination requires multiple images to reconstruct some polarization properties of a sample. It also requires an active illumination which is not compatible with many situations.

Lee, K (2019. Interpreting Intensity Speckle as the Coherency Matrix of Classical Light. Phys. Rev. Applied, 12 (2), uses a scattering media to simultaneously recover the phase and polarization of an incident light field with the knowledge of the polarized resolved transmission matrix and advanced phase retrieval algorithms. The first drawback of this technique is the complex system required to measure the transmission matrix which is not compatible for an "out of the lab" system. Moreover, the required phase retrieval algorithm may be difficult, time consuming and prone to artifacts in some instances.

There is a need for a simple system for simultaneous high-resolution imaging of the phase and the polarimetric parameters of a beam and/or a sample, that can be easily used.

## Summary of the invention

The invention makes it possible to overcome at least some of drawbacks of the prior art mentioned above thanks to a method for generating data related at least to the polarization state and the polarization rate, and advantageously to the wavefront shapes, of an incident light beam of any polarization state and any polarization rate, from a single intensity image acquisition $I_{sensor}$ of said light beam, using a polarization and wavefront shape imaging system which comprises a polarization modulating mask and an intensity sensor camera:

- the polarization modulating mask being a diffractive optical element having:

  - a polarization-resolved transmission or reflection matrix T,
  - the property to generate interference patterns between any two cross-polarized impinging beams, at several planes transverse to the propagation axis, the several transverse planes lying at several working distances from said polarization modulating mask,
    the interference patterns so depending on the two respective amplitudes and the relative phase of said two cross-polarized impinging beams, and

  - the property to generate at least one set of four reference intensity patterns, at least at one working distance from the polarization modulation mask, when illuminated by four respective impinging reference light beams, the four impinging reference light beams having polarization states defining all together a tetrahedron of non-zero volume when represented on the polarization Poincaré sphere, each said set of four reference intensity patterns forming a Stokes parameters image basis, meaning that the auto-correlation matrix

$$C_L = \left( \langle R_i | R_j \rangle_{L,G} \right)_{(i,j) \in [\![1,4]\!]}$$ of the corresponding four reference intensity patterns is invertible, $R_i$ being the reference pattern of polarization state i,

- the intensity sensor camera being placed downstream from said polarization modulating mask for recording an intensity image of the incident light beam, at least a part of which having preferentially been reflected by or transmitted through the polarization modulating mask, said intensity image lying at any of the several of said working distances from the polarization modulating mask,

the method comprising :

(A) having previously recorded one set of at least four reference intensity patterns with the intensity sensor camera of the imaging system, the reference intensity patterns being formed at one given of said working distances d from the polarization modulating mask, each reference intensity pattern having been generated by a respective impinging reference light beam of known wavefront shape, known polarization rate, and known polarization state, the polarization states of the impinging reference light beams defining all together a polyhedron of non-zero volume when represented on the polarization Poincaré sphere and reference intensity patterns defining a Stokes parameters image basis at the working distance d,

(B) recording the single intensity image $I_{sensor}$ of said incident light beam with the intensity sensor camera, the single intensity image being formed at the same given working distance d from the polarization modulating mask,

(C) processing the single intensity image $I_{sensor}$ based on the reference intensity patterns to generate the data related to the polarization state and the polarization rate, and advantageously to the wavefront shapes of the impinging light beam.

The polarization and wavefront shape imaging system only needs to be calibrated once, the calibration corresponding to the step (A) of the method for generating data related at least to the polarization state and the polarization rate.

The steps (A) and (B) may be achieved in the reverse order.

By "working distance from the polarization modulating mask" it must be understood the distance from the polarization modulating mask or, when the polarization modulating mask is imaged with an optical device, for example a set of lenses, the distance from the image of the polarization modulating mask by the optical device.

A polarization state is characterized by four Stokes parameters ($S_0$, $S_1$, $S_2$ and $S_3$). These four parameters can be represented in three dimensions using a so-called Poincaré sphere. The Cartesian axes of this three-dimensional

$$p = \frac{\sqrt{S_1^2 + S_2^2 + S_3^2}}{S_0}$$

space are $S_1$, $S_2$ and $S_3$. The polarization rate , can be represented as the radius of the sphere. The fourth degree of freedom, namely the total intensity $S_0$, is not represented in this case.

A polarimetric measurement may demand measuring reference intensities for reference beams having polarization states enclosing a non-zero volume when represented in the Poincaré three-dimensional space. At least four measurements may thus be required to define a non-zero volume in the Poincaré space. This requirement may also be true for the polarization and wavefront shape imaging system. In the latter, each reference beam generate an intensity pattern at the camera plane, downstream of the polarization modulating mask.

One additional requirement may be that the generated four reference intensity patterns define a basis when considering four respective reference beams. This property ensures the sensitivity of the system to any impinging polarization state described by any polarization Stokes vector.

The polarization and wavefront shape imaging system may be a simple "plug-and-play" imaging system, that may measure simultaneously the full polarization state and the corresponding wavefronts of an incident electric field in a single-shot manner. The system may be based on typical wavefront sensors technology, implemented with a polarization modulating mask that may encode both polarization and spatial phase information into intensity modulation.

The method may require no magnification optics between the polarization modulating mask and the camera sensor, which makes the system used to perform the method potentially more compact.

The method allows to obtain high resolution images of the phase and/or full polarization state of a light beam, from a single captured image.

**Intensity sensor camera**

The intensity sensor camera may be composed of a pixilated surface.

At least one subset of four reference intensity patterns among the at least four reference intensity patterns may have the property to generate an invertible auto-correlation matrix $C_L$.

To allow polarimetric imaging, there is a macro-pixel size $M_P$ over which the local cross-correlation matrix

$$C_L = \left( \langle R_i | R_j \rangle \right)_{(i,j) \in [\![1,4]\!]} = \left[ \overline{(R_i - \overline{R_i})(R_j - \overline{R_j})} \right]_{(i,j) \in [\![1,4]\!]}$$

of the four reference intensity patterns is invertible, i.e. its determinant is non-negligible, where the overline stands for the spatial average over one macro-pixel area:

$$\overline{R_k} = \frac{1}{M_p} \iint_{M_p} R_k(r) d^2 r$$

The minimum eigen-value of the matrix $C_L$ may not be lower than a few percent of the largest eigen-value of the matrix $C_L$. Preferentially, the four reference intensity patterns are orthogonal relatively to the local zero-mean cross-correlation product.

The auto-correlation matrix $C_L$ may be computed over a macro-pixel containing at least one 20x20 camera pixels or less, advantageously 12x12 camera pixels or less, more advantageously 6x6 camera pixels or less.

The number of camera pixels required to get one phase and polarization pixel scale may be $(\lambda d/w^2)^2$, where $\lambda$ is the wavelength of the beam, d is the working distance and w is the size of the structures at the mask.

"One phase and polarization pixel" may be defined here as one sampling point for both the wavefront gradient and the polarization state. Measuring one sampling point demands several intensity measurements which may be obtained at several corresponding nearby pixels of a camera. One phase and polarization pixel may thus spread over several camera pixels.

By "structures at the mask" one means that the mask exhibits structured regions allowing to modulate both the phase and the polarization state of the impinging beam so that beamlets interfering with different regions of the mask are scattered and interfere together after propagation over a distance d. The typical size of these structured regions w may be estimated by measuring the spatial correlation width of the polarization resolved transmission matrix of the mask.

A thin polarization modulating mask may be modeled by a polarized-resolved transmission matrix T expressed in an orthonormal basis of polarization states as:

$$T = \begin{bmatrix} T_{11} & T_{12} \\ T_{21} & T_{22} \end{bmatrix}$$

where $T_{ij}$ are transmission coefficients that are functions of the position x,y on the mask. One important characteristic of these coefficients is related to their spatial auto-correlation function:

$$C_{i,j}(x,y) = \iint T_{ij}(u,v) T_{ij}^*(u-x, v-y) du dv$$

This function exhibits a peak with a maximum at position (x,y) = (0,0), and an important property to be considered for wavefront sensing is the dimensions of this peak. These dimensions are usually quantified by measuring the full width at half maximum of the peak.

For the polarization modulating mask, we thus have 4 $C_{ij}$(x,y) functions having two typical dimensions each. We may consider the smallest full width at half maximum w over auto-correlations of all $T_{ij}$ coefficients. w may be defined as the smallest dimension of the correlation function of transmission matrix T. The mask may diffract light with a maximum angle scaling as $\lambda$/w, which determines the spatial resolution, i.e. the phase pixel size, of the wavefront sensor scaling as $\lambda$d/w where d is the separation distance between the mask, or its image (by an optical device, for example a set of lenses), and the plane of observation of the camera. The smaller w, the larger the phase pixel size and the worse the spatial phase resolution.

Since the intensity structures at the camera plane, of same typical size w as the mask, must be resolved by camera pixels, it means that the number of camera pixels required to get one phase pixel may scale as $(\lambda d/w^2)^2$. To get the highest possible resolution, a wavefront sensor should thus minimize this quantity.

The system may work with distances smaller than the Rayleigh distance $z_R = \pi w^2/\lambda$, in contrast to a micro-lens that cannot yield a sharp focus at a distance less than the Rayleigh distance. Indeed, for a lens, w = $\lambda$f/a where *a* is the diameter of the micro-lens. Having a focal length f smaller than the Rayleigh distance imposes that $f > a^2/(\pi\lambda)$ which inefficiently focus light because the diffraction by the micro-lens aperture counterbalances focusing. In the limit case of a micro-lens focusing at a distance equal to $z_R$, $(\lambda d/w^2)^2 = \pi^2 \approx 10$.

To allow phase imaging, the distance between the polarization modulating mask, or its image, and the camera is small enough so that wavefront distortions induce local pattern displacements s much smaller than the aforementioned macro-pixel dimensions. The global cross-correlation matrix $C_L$ may remain invertible over the typical displacement amplitude s of typical sought-for wavefronts. Preferentially, the four reference intensity patterns are orthogonal relatively to the global zero-mean cross-correlation product when s runs over the full macro-pixel size.

Global zero-mean cross-correlation product may be arranged in a global auto-correlation matrix potentially defined as:

$$C_G = \left( \langle R_i | R_j \rangle_G \right)_{(i,j)\in[\![1,4]\!]} = \left\{ \max_s \left[ \iint R_i(r) R_{jj}^*(r-s) d^2 r \right] \right\}_{(i,j)\in[\![1,4]\!]}$$

The intensity sensor camera may be placed so that the intensity image is lying at a working distance d shorter than $\pi w^2/ \lambda_{average}$, $\lambda_{average}$ being the average wavelength of the incident light beam and w being a smallest dimension of auto-correlation functions of the coefficients of the polarization-resolved transmission or reflection matrix T, one auto-correlation function being computed per coefficient.

The intensity sensor camera may be any camera, for instance optimized for fluorescence imaging. The intensity sensor camera may alternatively be a combination of several cameras.

**Polarization modulating mask**

The polarization modulating mask may reflect or transmit the whole incident light beam. Alternatively, the polarization modulating mask may reflect or transmit only a part of the incident light beam. In another alternative, the polarization modulating mask may not reflect nor transmit the incident light beam.

The polarization modulating mask may be configured so that $e_{min}/e_{max}$ is greater than 1.5%, better than 1%, wherein $e_{min}$ and $e_{max}$ are respectively the smallest and the largest eigen-values of the auto-correlation matrix

$$C_L = \left( \langle F_i | F_j \rangle_{L,G} \right)_{(i,j)\in[\![1,12]\!]}$$ constructed from both the reference intensity patterns and their respective intensity gradient maps.

The role of the mask is to induce spatially varying changes to the polarization state of the beam. The system relies on the assumption that the correlation width of the beam at the mask plane is larger than the typical size w of the structures of the mask so that nearby beamlets at the mask may yield interference patterns.

The polarization modulating mask may induce interferences between two coherent, but cross-polarized field components of the incident light beam, at the camera plane. Consequently, the intensity pattern at the camera plane may depends on the relative phases and amplitudes between two cross-polarized beams, which means that the intensity pattern may depend on the polarization state of the incident beam.

The polarization modulating mask may be configured to cause the intensity image to depend on the wavefront shape of the incident light beam. A tilt applied to the wavefront shape may result in a displacement of the intensity image.

We define as the angular "memory effect" of the mask, the property to induce a translation of the intensity image under a tilt of the impinging wavefront. This property is typically valid for any thin enough mask. In this case, the translation amount may be proportional to the local wavefront gradient.

The intensity pattern, i.e. the intensity image, created by the mask at the camera plane may be deformed by wavefront distortion, so allowing retrieving also the spatial phase of the beam like in regular wavefront sensors.

The polarization modulating mask may comprise a birefringent diffraction grating consisting for example in a periodic lattice based on a unit cell, for instance a two-dimensional periodic lattice, advantageously with a unit cell being a square cell.

The birefringent diffraction grating allows tuning the sensitivity by changing the distance between the mask, or its image, and the camera, since for a given mask, several working distances are possible.

The birefringent modulating mask may work as efficiently in the visible range as in the near infrared range.

The polarization modulating mask may comprise a diffractive optical element made of a plurality of polarization modulating domains, each polarization modulating domain having preferably a uniform polarization-resolved matrix over said polarization modulating domain, the polarization modulating domains being for instance randomly arranged or periodically arranged in a lattice in the polarization modulating mask.

One domain may be as large as three camera pixels or larger. A unit cell made of 2x2 domains may thus be as large as 6x6 camera pixels at least.

One domain may be composed of metallic or dielectric nano-rods.

Each unit cell may comprise four square adjacent polarization modulating domains, preferably arranged in rows and columns, the four square adjacent polarization modulating domains having preferentially a linear retardance of $\pi/2 \pm \pi/4$ rad and/or relative fast axes orientations rotating by $\{+\pi/3 \ +\pi/3 \ -\pi/3 \ -\pi/3\}$ radians when running around the four adjacent domains clockwise or counter clockwise, the tolerance on fast-axes orientations being preferably $\pm \pi/6$ rad.

As an alternative, each unit cell may comprise 16 square adjacent polarization modulating domains arranged in rows and columns.

A unit cell may modulate all polarization components of the light beam, allowing spreading the light energy over the full camera surface, so optimizing the spatial density of sampling point and thus the spatial resolution of the phase and polarimetric images.

The polarization modulating mask may comprise chiral and/or non-chiral liquid crystals, each liquid crystal being characterized by its alignment.

The polarization modulating mask may be configured to allow the alignment or the position of the liquid crystals to be modified by applying an external voltage, a local and/or a global temperature change, and/or any non-linear optical process.

The polarization modulating mask may be chosen among the group made of a depolarizing diffuser like a thin layer of white paint, a liquid-crystal thin film, with liquid crystals orientations tailored according to a periodic lattice of a unit cell, a liquid-crystal thin film, with liquid crystals orientations having random organization, potentially exhibiting topological dislocations, a liquid crystal thin film with electro-optical control to tune the device performances, a birefringent poly-crystalline structure, a meta-surface made of metallic or dielectric nano-structures, and an array of polarization sensitive diffraction gratings with various orientations.

The polarization modulating mask may be made of metamaterials. Alternatively, it may be made of any birefringent material, like liquid crystal cells, which maximize the modulation rate of the incident beam.

Preferentially, the polarization modulating mask has a transmission coefficient larger than 0.95 and diffracts at least 30% of an unpolarized impinging beam. The fraction of undiffracted light may then be less than 70% of the transmitted beam. The fraction of undiffracted light may be measured experimentally by sending a set of four impinging beam representing a basis of all polarization states, for instance linear 0°, 45°, 90° and right-handed circular, and by measuring in each case the fraction of light energy at the focal point of a lens. For a fully polarized incident beam, the output beam has preferentially a polarization rate as close to 1 as possible. The polarization rate of the output beam depends on the ratio of the spectral correlation width of the mask on the one hand, and the spectral width of the input beam, on the other hand.

Structured or random assembly of liquid crystal or protein crystal, for instance, makes the fabrication process of the mask well controlled. The advantage of dense crystalline structures and liquid crystal structures is that the fraction of phase and polarization unmodulated light can easily be made very small, contrary to metasurfaces based on resonant nanostructures. Moreover, resonant nanostructures are known to exhibit important spectral dependence.

The polarization modulating mask may be non-achromatic, the spectral width of the light beam being preferentially smaller than the spectral correlation width of the transmission matrix of the mask.

The polarization modulating mask may be a dynamic polarization and/or phase shifter, for example based on an acousto-optical device, a scanning mirror, a spatial light modulator, or a piezo-electric device.

**Incident light beam**

The incident light beam may be generated by a light source.

The method according to the invention is compatible with temporally low-coherence light sources. The method may not require active illumination nor active detection.

The incident light beam may have a partial polarization coherence.

The incident light beam may have a large enough spatial coherence width. The system performs better for impinging beam exhibiting typical spatial coherence width larger than the typical size of the mask structures w. This means that over one single structure width area $w^2$ of the mask, the incident beam may be characterized by one single wavefront gradient vector and one single polarization state.

The method may be working over the entire visible domain, where the camera sensor is the most efficient.

When considering broadband light beams, the wavelength to be considered is the average wavelength, measured over the spectrum of the light beam: $\lambda_{average} = \dfrac{\int \lambda s(\lambda) d\lambda}{\int s(\lambda) d\lambda}$, where s($\lambda$) is the power spectrum density of the impinging signal light beam.

The polarization and wavefront shape imaging system may comprise a polarizer downstream from the light source to linearly polarize the incident light beam. The system may comprise a quarter waveplate downstream from the polarizer to circularly polarize the incident light beam.

## Method

At step (A) of the method, the recording of the set of at least four reference intensity patterns may be achieved by using spatially coherent light in combination with a polarization state generator. The polarization state generator may be composed of polarization optics and/or electro-optics such as polarizers, retarding waveplates and liquid-crystal retarding plates controlled by external voltage.

The set of reference intensity patterns may comprise N reference intensity patterns $(R_p)_{p \in [1:N]}$, N being larger than or equal to 4.

The step (C) may comprise :

(C.1) computing polarization weights data $A = ((\alpha_p)_{p \in [1:N]}$ and deformation data $(s_p)$ of each given reference intensity pattern, for the single intensity image, by running a reconstruction algorithm, minimizing the difference between $I_{sensor}(r_j)$ and $\sum_{p=1}^{N} \alpha_p(r_j) R_p(r_j + s_{p,j})$, j being a given camera pixel of the intensity sensor camera, $r_j$ being said pixel coordinate at the camera sensing plane, $F_p$ being the reference pattern of polarization state p, $s_p$ being a deformation data representing the amount of relative displacement of the pattern $F_p$, $s_p$ being proportional to the wavefront gradient of the fraction of signal light beam having polarization state p, the polarization weights data $\alpha_p(r)$ and deformation data $s_p$ being representative of a polarization state and a diffeomorphism, respectively, and

(C.2) calculating the Stokes parameters and the spatial phase of the incident light beam from the polarization weights data $(\alpha_p)$ and deformation data $(s_p)$.

The minimization between $I_{sensor}(r_j)$ and $\sum_{p=1}^{N} \alpha_p(r_j) R_p(r_j + s_{p,j})$ may be achieved considering subsets of pixels, called macropixels, assuming that both $\alpha_p(r_j)$ and $s_{p,j}$ are constant over each macropixel. For instance, one set of value $\alpha_{p,k}$ and $s_{p,k}$ assumed to be constant over a macropixel k may be obtained by considering minimizing the norm 2 difference $L_k$:

$$L_k = \sum_j W(r_j) \left| I_{sensor}(r_j) - \sum_{p=1}^{4} \alpha_{p,k} R_p(r_j + s_{p,k}) \right|^2$$

where the summation is achieved for j running over all pixels of macropixel k and where $W(r_j)$ may be any weighting function.

This minimization may be achieved using gradient descent algorithms, pseudo-inversion, thresholded inversion by singular value decomposition, convolutional neuronal networks. Alternatively, the minimization between $I_{sensor}(r_j)$ and $\sum_{p=1}^{N} \alpha_p(r_j) R_p(r_j + s_{p,j})$ may be achieved using any other norm than the norm 2.

The deformation data $s_{p,k}$ describes a diffeomorphism of the intensity patterns, i.e. the distortion experienced by the reference intensity patterns under wavefront deformation of the corresponding reference light beams.

The N reference intensity patterns may have been generated by N respective impinging reference light beams.

The N reference impinging beams are preferentially evenly distributed over the so-called polarization Poincaré sphere. In polarimetry, the measurement accuracy is proportional to the volume in the Poincaré sphere enclosed by the simplex whose corners are the reference polarizations. Hence, the four reference impinging beams are preferentially the corners of a regular tetrahedron.

The N reference beams may be only partially polarized, in which case the aforementioned requirement about the N reference beams applies to their polarized components.

N may be equal to four. The four impinging beams may have respective polarizations : linear 0°, linear 45°, linear 90° and circular right-handed. An alternative may consist in four impinging beams having respective polarizations: linear 0°, linear 45°, circular right-handed and circular left-handed.

For optimal reconstruction, a set of six impinging reference light beams may be used of respective polarizations: linear 0°, linear 45°, linear 90°, linear -45°, circular right-handed and circular left-handed.

The wavefront shape $\varphi_p$ associated with polarization state p may be rebuilt thanks to a two-dimensional inte-

$$\overrightarrow{\nabla \varphi_p} = \frac{2\pi}{d\lambda_{average}} \overrightarrow{s_p}$$

gration of the vector fields , as described in EP20305898, wherein $s_p$ is the deformation data expressed as a displacement amount at the camera plane, d is the separation distance between the polarization modulating mask, or its image, and the single intensity image $I_{sensor}$ of the impinging light beam, and $\lambda_{average}$ is the average wavelength of the impinging light beam.

N reference intensity patterns $R = (R_p)_{p \in [1:N]}$, N being larger than or equal to 4, may be generated by N respective impinging reference light beams having any N known polarization states defining all together a polyhedron of non-zero volume when represented on the polarization Poincaré sphere, the polarization state of the N impinging reference light beams having known respective Stokes vector representations $SR = (SR_p)_{p \in [1:N]}$, the step (C.2) comprising:

(C.2.1) Computing a measurement matrix W relating the Stokes vector representation of the impinging reference light beams to their corresponding reference intensity patterns according to the matrix equation: $R = W \times SR$, and
(C.2.2) computing a Stokes parameter vector image S of the incident light beam from the single intensity image $I_{sensor}$ by inverting the matrix equation $I_{sensor} = W \times S$ or from the polarization weight data $A = (\alpha_p)_{p \in [1:N]}$ by inverting the matrix equation: $R \times A = W \times S$.

# N=4

The four impinging reference light beams may have flat wavefronts, and polarization states represented respectively in the Cartesian coordinates basis by the Jones vectors $V_1 = \begin{bmatrix} 1 \\ 0 \end{bmatrix}$, $V_2 = \begin{bmatrix} 0 \\ 1 \end{bmatrix}$, $V_3 = \frac{1}{\sqrt{2}} \begin{bmatrix} 1 \\ 1 \end{bmatrix}$ and

$V_4 = \frac{1}{\sqrt{2}} \begin{bmatrix} 1 \\ i \end{bmatrix}$, having respective Stokes vector representations $SF_1 = \begin{pmatrix} 1 \\ 1 \\ 0 \\ 0 \end{pmatrix}$, $SF_2 = \begin{pmatrix} 1 \\ -1 \\ 0 \\ 0 \end{pmatrix}$, $SF_3 = \begin{pmatrix} 1 \\ 0 \\ 1 \\ 0 \end{pmatrix}$,

$SF_4 = \begin{pmatrix} 1 \\ 0 \\ 0 \\ 1 \end{pmatrix}$, generating respective reference intensity patterns $R_1$, $R_2$, $R_3$, and $R_4$, the step (C.2.2) comprising: calculating the Stokes parameters $S_0$, $S_1$, $S_2$ and $S_3$ of the incident light beam using the equations : $S_0 = \alpha_1 + \alpha_2$, $S_1 = \alpha_1 - \alpha_2$, $S_2 = \alpha_3$ and $S_3 = \alpha_4$.

The polarization modulating mask may have the property to generate several sets of four reference intensity patterns at respective several working distances from the polarization modulating mask, when illuminated by four respective impinging reference light beams, one set of four reference intensity patterns per working distance.

The four impinging reference light beams may have polarization states defining all together a tetrahedron of non-zero volume when represented on the polarization Poincaré sphere, and each said set of four reference intensity patterns may form a Stokes parameters image basis, meaning that the auto-correlation matrix $C_L$ of the corresponding four reference intensity patterns is invertible. This allows the working distance d to be changed to improve sensitivity to weak wavefront deformations, and/or to improve spatial resolution, and/or to maximize the orthogonality of the four reference intensity patterns, for instance by maximizing the minimum eigen-value of an auto-correlation matrix $C_L$ involving all reference intensity patterns.

Shorter distances d may yield better spatial resolution. Large distances d may improve sensitivity to small wavefront distortions.

The polarization modulating mask may have the patterns generated at the working distance d, each with their respective two gradient component patterns, defining together a basis of 12 patterns, meaning that the 12x12 elements auto-correlation matrix $C_L = \left(\langle F_i|F_j\rangle_{L,G}\right)_{(i,j)\in[\![1,12]\!]}$ constructed over at least one macropixel from both the reference intensity patterns and their respective intensity gradient maps be invertible, in order to ensure that the wavefront shapes of the incident light beam may be computed in addition to its polarization state and polarization rate.

The 12x12 elements auto-correlation matrix $C_L$ may be defined as:

$$C_L = \left(\langle F_i|F_j\rangle\right)_{(i,j)\in[\![1,12]\!]} = \overline{\left[(F_i - \overline{F_i})(F_j - \overline{F_j})\right]}_{(i,j)\in[\![1,4]\!]}$$

with

$$F_1 = R_1 \qquad F_2 = R_2 \qquad F_3 = R_3 \qquad F_4 = R_4$$
$$F_5 = \partial_x R_1 \qquad F_6 = \partial_x R_2 \qquad F_7 = \partial_x R_3 \qquad F_8 = \partial_x R_4$$
$$F_9 = \partial_y R_1 \qquad F_{10} = \partial_y R_2 \qquad F_{11} = \partial_y R_3 \qquad F_{12} = \partial_y R_4$$

and where $R_1$, $R_2$, $R_3$ and $R_4$ are the four reference intensity patterns.

Considering this auto-correlation matrix may be advantageous in the case of small enough wavefront gradients inducing intensity patterns displacement typically smaller than w.

In the case where $R_1$ and $R_2$ are obtained for two orthogonally polarized impinging reference light beams, one may also alternatively consider for $F_1$, $F_2$, $F_3$ and $F_4$:

$$F_1 = R_1 \qquad F_2 = R_2 \qquad F_3 = R(z) \qquad F_4 = I(z)$$
$$F_5 = \partial_x R_1 \qquad F_6 = \partial_x R_2 \qquad F_7 = \partial_x R(z) \quad F_8 = \partial_x I(z)$$
$$F_9 = \partial_y R_1 \qquad F_{10} = \partial_y R_2 \qquad F_{11} = \partial_y R(z) \quad F_{12} = \partial_y I(z)$$

with : $R(z) = R_3 - \frac{1}{2}(R_1 + R_2)$ and $I(z) = R_4 - \frac{1}{2}(R_1 + R_2)$ .

The orthogonality of this alternative set of patterns $R_1$, $R_2$, $R_3$ and $R_4$ is equivalent to the former one. However, the eigen-values of $C_L$ obtained in either cases may be different and may suggest different optimized working points.

Having the 12x12 auto-correlation matrix being invertible ensures that the global auto-correlation matrix $C_G = \left(\langle R_i|R_j\rangle_G\right)_{(i,j)\in[\![1,4]\!]}$ is also invertible in the particular case of small enough wavefront gradients yielding small enough displacements of intensity patterns at the camera.

**Optimization polarization modulating mask**

An efficient criterion to ensure phase imaging capability may be to optimize the polarization modulating mask so that the auto-correlation matrix made of both the reference intensity patterns and their respective gradient maps be invertible. This auto-correlation matrix is invertible if and only if its determinant is not zero.

The determinant of this 12x12 auto-correlation matrix may be maximized to ensure optimal retrieval of the four Stokes vector components together with their related local wavevector, having two spatial components each. Maximizing the determinant is equivalent to maximizing the ratio between the smallest eigenvalue and the largest eigenvalue of the auto-correlation matrix. Such an optimization may be done using a genetic algorithm.

The polarization modulating mask may be optimized using the following algorithm:

i. Recording four reference intensity patterns $R_1$, $R_2$, $R_3$, and $R_4$ with the polarization and wavefront shape imaging system, each reference intensity pattern being generated by a respective impinging light beam, the four impinging reference light beams having flat wavefronts, normalised intensity and known polarization states represented respectively in the Cartesian coordinates basis by the Jones vectors $V_1 = \begin{bmatrix} 1 \\ 0 \end{bmatrix}$, $V_2 = \begin{bmatrix} 0 \\ 1 \end{bmatrix}$, $V_3 = \frac{1}{\sqrt{2}}\begin{bmatrix} 1 \\ 1 \end{bmatrix}$ and

$V_4 = \frac{1}{\sqrt{2}}\begin{bmatrix} 1 \\ i \end{bmatrix}$, or equivalently, corresponding to the Stokes vectors $SF_1 = \begin{pmatrix} 1 \\ 1 \\ 0 \\ 0 \end{pmatrix}$, $SF_2 = \begin{pmatrix} 1 \\ -1 \\ 0 \\ 0 \end{pmatrix}$,

$SF_3 = \begin{pmatrix} 1 \\ 0 \\ 1 \\ 0 \end{pmatrix}$, $SF_4 = \begin{pmatrix} 1 \\ 0 \\ 0 \\ 1 \end{pmatrix}$, and

ii. Calculating the matrix $C_L = \left( \langle F_i | F_j \rangle_{L,G} \right)_{(i,j)\in[\![1,12]\!]}$, $C_L = \left( \langle F_i | F_j \rangle_{L,G} \right)_{(i,j)\in[\![1,12]\!]}$ being the auto-correlation matrix constructed from both the reference intensity patterns and their respective gradients, with :

$$F_1 = R_1 \qquad F_2 = R_2 \qquad F_3 = R(z) \qquad F_4 = I(z)$$
$$F_5 = \partial_x R_1 \qquad F_6 = \partial_x R_2 \qquad F_7 = \partial_x R(z) \qquad F_8 = \partial_x I(z),$$
$$F_9 = \partial_y R_1 \qquad F_{10} = \partial_y R_2 \qquad F_{11} = \partial_y R(z) \qquad F_{12} = \partial_y I(z)$$

with: $R_1 = |P_d(TV_1)|^2$, $R_2 = |P_d(TV_2)|^2$, $R(z) = R_3 - \frac{1}{2}(R_1 + R_2)$, $I(z) = R_4 - \frac{1}{2}(R_1 + R_2)$, $R_3 = |P_d(TV_3)|^2$ $\wedge R_4 = |P_d(TV_4)|^2$, where $|P_d(TV_p)|^2$ is the reference intensity pattern recorded for the reference intensity light beam of vector $V_p$, $P_d$ being a free space propagation function and T being the polarized-resolved transmission or reflection matrix of the depolarizing mask

iii. Modifying the polarized-resolved matrix of the polarization modulating mask and repeating steps i. and ii., if $C_L$ is not invertible or if the ratio of eigen-values $e_{min}/e_{max}$ of $C_L$ is smaller than 1.5% or 1%.

## Interferometers

The polarization and wavefront shape imaging system may comprise an interferometer upstream of the intensity sensor camera.

The interferometer may be chosen among the following list of known interferometers: Linnik interferometer, Mach-Zehnder interferometer, Fabry-Perot interferometer.

The polarization modulating mask may be inside the interferometer. By "inside the interferometer" it must be understood that at least a part of the light beam entering the interferometer is reflected by or transmitted through the polarization modulating mask before exiting the interferometer.

The interferometer may comprise a set of lenses allowing to image the polarization modulating mask at a distance d to the intensity sensor camera equal to zero and to potentially increase the spatial resolution of the polarization images and/or wavefront shapes images.

The interferometer may comprise two optical paths.

The polarization modulating mask may be located on one of the two optical paths of the interferometer to induce a global phase shifting.

In particular, the reference intensity patterns and the signal intensity pattern allowing the measurement of polarization and preferentially wavefront shapes data, may be recorded by the intensity sensor camera by creating an interference between two parts of the incident light beam propagating respectively on the two optical paths of the interferometer.

Several intensity images of the signal light beam may be recorded with the intensity sensor camera, the several intensity images being notably recorded after inducing a phase and/or a polarization shift to at least one of the two arms of the interferometer by using a dynamic device, for instance by moving one of the mirrors of the interferometer by a slight amount, in particular over one wavelength, using a piezo-electric translation stage.

## Imaging system

A further subject of the invention, according to another of the aspects thereof, is a polarization and wavefront shape imaging system for generating data related at least to the polarization state and the polarization rate, and advantageously to the wavefront shapes, of an incident light beam of any polarization state and any polarization rate, from a single intensity image acquisition $I_{sensor}$ of said light beam, which comprises:

- a polarization modulating mask being a diffractive optical element having:

  - a polarization-resolved transmission or reflection matrix T, and
  - the property to generate interference patterns between any two cross-polarized impinging beams, at several planes transverse to the propagation axis, the several transverse planes lying at several working distances from said polarization modulating mask,
    the interference patterns so depending on the two respective amplitudes and the relative phase of said two cross-polarized impinging beams, and
  - the property to generate at least one set of four reference intensity patterns, at least at one working distance from the polarization modulation mask, when illuminated by four respective impinging reference light beams, one set of four reference intensity patterns per working distance,
    the four impinging reference light beams having polarization states defining all together a tetrahedron of non-zero volume when represented on the polarization Poincaré sphere, and each said set of four reference intensity patterns forming a Stokes parameters image basis, meaning that the auto-correlation matrix

$$C_L = \left( \langle R_i | R_j \rangle_{L,G} \right)_{(i,j) \in [\![1,4]\!]}$$ of the corresponding four reference intensity patterns is invertible, Ri being the reference pattern of polarization state i,

- an intensity sensor camera being placed downstream from said polarization modulating mask for recording an intensity image of the incident light beam, at least a part of which having preferentially been reflected by or transmitted through the polarization modulating mask, said intensity image lying at any of the several of said working distances from the polarization modulating mask,
- storage and computing means for :

  (a) preferentially recording one set of at least four reference intensity patterns with the intensity sensor camera of the imaging system, the reference intensity patterns being formed at one given of said working distances d, from the polarization modulating mask, each reference intensity pattern having been generated by a respective impinging reference light beam of known wavefront shape, known non-zero polarization rate, and known polarization state, the polarization states of the impinging reference light beams defining all together a polyhedron of non-zero volume when represented on the polarization Poincaré sphere and reference intensity patterns defining a Stokes parameters image basis at the working distance d, thus allowing the determination of the full polarization state of the impinging light beam,
  (b) recording the single intensity image $I_{sensor}$ of said incident light beam with the intensity camera sensor, the single intensity image being formed at the same given working distance d from the polarization modulating mask,
  (c) processing the single intensity image based on the reference intensity patterns to generate the data related to the polarization state and the polarization rate, and advantageously to the wavefront shapes of the impinging light beam.

The storage and computing means may be chosen among the list: a personal computer potentially equipped with a graphic card, a cell phone, a field-programmable gate array, a microcontroller, or a programmable logic device.

The intensity sensor camera may comprise a pixilated surface, at least one subset of four reference intensity patterns among the at least four reference intensity patterns having the property to generate an invertible auto-correlation matrix $C_L$, and the auto-correlation matrix may be computed over at least one macropixel containing less than 20x20 camera pixels, better less than 12x12 camera pixels, better less than 6x6 camera pixels.

The set of reference intensity patterns may comprise N reference intensity patterns $(R_p)_{p \in [1:N]}$, N being larger than or equal to 4. The storage and computing means may be configured for, in the step (c) :

(c.1) computing polarization weights data $A = (\alpha_p)_{p \in [1:n]}$ and deformation data ($s_p$) of each given reference intensity pattern, for the single intensity image, by running a reconstruction algorithm minimizing the difference between

$I_{sensor}(r_j)$ and $\sum_{p=1}^{n} \alpha_p(r_j)R_p(r_j + s_{p,j})$, j being a camera pixel of the intensity sensor camera, $r_j$ being said pixel coordinate at the camera sensing plane, $R_p$ being the reference pattern of polarization state p, $s_p$ being a deformation data representing the amount of relative displacement of the pattern $R_p$, $s_p$ being proportional to the wavefront gradient of the fraction of signal light beam having polarization state p, the polarization weights data $\alpha_p(r)$ and deformation data $s_p$ being representative of a polarization state and a diffeomorphism, respectively, and

(c.2) calculating the Stokes parameters and the spatial phase of the incident light beam from the polarization weights data ($\alpha_p$) and deformation data ($s_p$).

The polarization modulating mask may comprise a diffraction grating consisting in a periodic lattice based on an unit cell, for instance a two-dimensional periodic lattice, in particular the unit cell is a square cell, in particular each unit cell comprising four square adjacent polarization modulating domains arranged in rows and columns.

The polarization modulating mask may comprise a plurality of polarization modulating domains, each polarization modulating domain having preferably a uniform polarization-resolved matrix over said polarization modulating domain, the polarization modulating domains being for instance randomly arranged or periodically arranged in a lattice in the polarization modulating mask.

Each unit cell may comprise four adjacent polarization modulating domains arranged in rows and columns, the four adjacent polarization modulating domains having preferentially a linear retardance of $\pi/2 \pm \pi/4$ rad and relative fast axes orientations rotating by {$+\pi/3$ $+\pi/3$ $-\pi/3$ $-\pi/3$} radians when running around the four adjacent domains clockwise or counter clockwise, the tolerance on fast-axes orientations being $\pm \pi/6$ rad.

The polarization modulating mask may comprise chiral and/or non-chiral liquid crystals, each liquid crystal being characterized by its alignment.

The polarization modulating mask may comprise a nanostructured metamaterial.

The polarization modulating mask may be placed in the close vicinity of the chip of the intensity camera sensor or, alternatively, it may be imaged in a plane close to the camera using a plurality of lenses and/or mirror.

**• Mask**

Another subject of the invention, according to another of the aspects thereof, is a polarization modulating mask comprising a diffraction grating consisting in a periodic two-dimensional lattice based on a unit cell comprising a plurality of depolarizing domains, the unit cell comprising four square adjacent polarization modulating domains arranged in rows and columns, the four adjacent polarization modulating domains having a linear retardance of $\pi/2 \pm \pi/4$ rad and their relative fast axes orientations rotate by {$+\pi/3$ $+\pi/3$ $-\pi/3$ $-\pi/31$} radians when running around the four adjacent domains clockwise or counter clockwise, the tolerance on fast-axes orientations being $\pm \pi/6$ rad.

**• Use of the system**

Another subject of the invention, according to another of the aspects thereof, is a use of the system described above, for at least one of the following applications : polarization imaging, phase imaging, fluorescence imaging, super-resolution fluorescence microscopy, back-scattering imaging, to record phase and/or polarimetric images of a sample, so providing information about the molecular and/or structural organization of the sample.

**• Method for generating data related at least to the polarization state and the polarization rate**

According to another of its aspects, the invention relates to a method for generating data related at least to the polarization state and the polarization rate, and advantageously to the wavefront shapes, of an incident light beam of any polarization state and any polarization rate, from a single intensity image acquisition $I_{sensor}$ of said light beam, using a polarization and wavefront shape imaging system which comprises a polarization modulating mask and an intensity sensor camera:

- the polarization modulating mask being a diffractive optical element having:

  - a polarization-resolved transmission or reflection matrix T,
  - the property to generate interference patterns between any two cross-polarized impinging beams, at several planes transverse to the propagation axis, the several transverse planes lying at several working distances from said polarization modulating mask,

the interference patterns so depending on the two respective amplitudes and the relative phase of said two cross-polarized impinging beams, and

- the property to generate at least one set of four reference intensity patterns, at least at one working distance (d) from the polarization modulation mask, when illuminated by four respective impinging reference light beams,

the four impinging reference light beams having polarization states defining all together a tetrahedron of non-zero volume when represented on the polarization Poincaré sphere,

each said set of four reference intensity patterns forming a Stokes parameters image basis, meaning that the auto-correlation matrix $C_L = \left( \langle R_i | R_j \rangle_{L,G} \right)_{(i,j) \in [\![1,4]\!]}$ of the corresponding four reference intensity patterns is invertible,

$R_i$ being the reference intensity pattern of polarization state i,

- the intensity sensor camera being placed downstream from said polarization modulating mask for recording the intensity image $I_{sensor}$ of the incident light beam, at least a part of which having preferentially been reflected by or transmitted through the polarization modulating mask, or alternatively at least a part of which having interfering with a beam reflected by or transmitted through the polarization modulating mask, said intensity image lying at any of the several of said working distances from the polarization modulating mask,

the method comprising, when the polarization modulating mask is known by design and potentially included in a interferometer:

(A') recording the single intensity image $I_{sensor}$ of said incident light beam with the intensity sensor camera, the single intensity image being formed at the same given working distance from the polarization modulating mask,

(B') processing the single intensity image $I_{sensor}$ based on the design of the polarization modulating mask to generate the data related to the polarization state and the polarization rate, and advantageously to the wavefront shapes of the impinging light beam.

## Brief description of the figures

The accompanying drawings, which are incorporated in and constitute a part of the specification, illustrate presently preferred embodiments of the invention, and together with the description, serve to explain the principles of the invention. In the drawings:

Figure 1 is schematic view of a first example of a polarization and wavefront shape imaging system made in accordance with the invention,

Figure 2a is an illustration of a first example of birefringent pattern that can be used as a unit cell for a periodic-lattice polarization modulating mask made in accordance with the invention,

Figure 2b is a graphic showing the functioning points of a polarization and wavefront shape imaging system made in accordance with the invention with the polarization modulating mask of figure 2a,

Figure 2c is an illustration of a periodic-lattice polarization modulating mask made of an arrangement of the unit cell of Figure 2a,

Figure 2d is another illustration of the unit cell of Figure 2a,

Figure 2e is another illustration of the unit cell of Figure 2a,

Figure 3a is an illustration of a second example of birefringent pattern that can be used as a unit cell for a periodic-lattice polarization modulating mask made in accordance with the invention,

Figure 3b is an illustration of a liquid-crystal polarization modulating mask lattice made of a periodic arrangement of the unit cell of Figure 3a,

Figure 3c is a graphic showing the functioning points of a polarization and wavefront shape imaging system made in accordance with the invention with the polarization modulating mask of figure 3b,

Figure 4 is a graphic showing the functioning points of a polarization and wavefront shape imaging system made in accordance with the invention with a random polarization modulating mask,

Figure 5 is diagram of the principle of the polarized wavefront sensing made in accordance with the invention,

Figure 6a is a diagram of the workflow of a reconstruction algorithm made in accordance with the invention,

Figure 6b is a diagram of the workflow of another reconstruction algorithm made in accordance with the invention,
Figure 6c is a diagram of the workflow of the algorithm used for demultiplexed registration in Figure 6b,
Figure 7 shows simulations results obtained with the polarization modulating mask made in accordance with the invention,
Figure 8 shows experimental results obtained with a liquid crystal Q-plates with a thin layer of white paint as a polarization modulating mask,
Figure 9a is schematic view of a first example of a polarization and wavefront shape imaging system made in accordance with the invention and comprising a Linnik interferometer,
Figure 9b is schematic view of a second example of a polarization and wavefront shape imaging system made in accordance with the invention and comprising a Linnik interferometer,
Figure 9c is schematic view of a first example of a polarization and wavefront shape imaging system made in accordance with the invention and comprising a Mach-Zehnder interferometer,
Figure 9d is schematic view of a second example of a polarization and wavefront shape imaging system made in accordance with the invention and comprising a Mach-Zehnder interferometer,
Figure 9e is schematic view of an example of a polarization and wavefront shape imaging system made in accordance with the invention and comprising a Fabry-Perot interferometer.


### Detailed description of the figures

### System

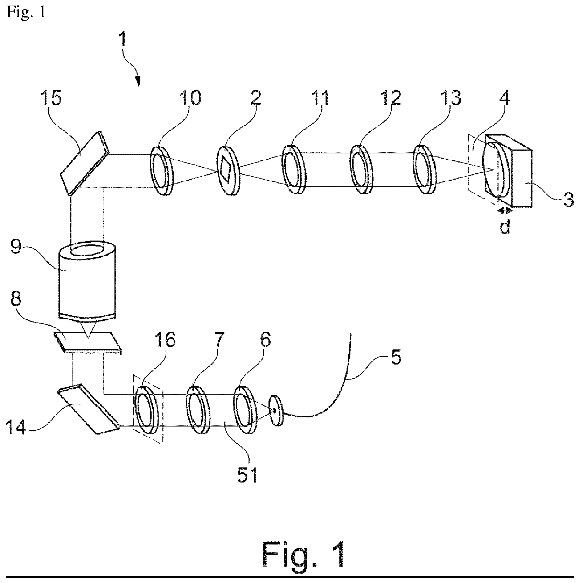

Figure 1 shows a polarization and wavefront shape imaging system 1 comprising a polarization modulating mask 2 and an intensity camera sensor 3. The system 1 comprises a fiber 5 connected to a laser source, that sends a beam light 51 through a collimation lens 6. The collimated beam light passes through a polarizer 7 of the system 1, which allows to linearly polarize the light that is then sent to a sample 8 to analyse. The light diffracted by the sample 8 is directed through a microscope objective 9 and a tube lens 10, both comprised in the system 1, before being focalised on the mask 2. The polarization modulating mask 2 is imaged at a short distance d from the camera 3, in an image plane 4, thanks to a set of lenses 11 and 12 comprised in the system 1, for example arranged in an afocal telescope. In this case, the camera 3 can record either a real image plane, lying after the image plane 4 of the mask 2, but it can also record a "virtual image", located in a virtual image plane lying before the image plane 4 of the mask 2. Some polarization modulating mask 2 can also be exactly imaged onto the camera 3.

The system 1 may comprise mirrors 14 and 15 to direct the light in a wanted direction. It may also comprise diaphragms 13 to adjust the aperture of the light beam 51. A removable quarter waveplate 16 may also be comprised in the system after the polarizer 7 to circularly polarize the light.

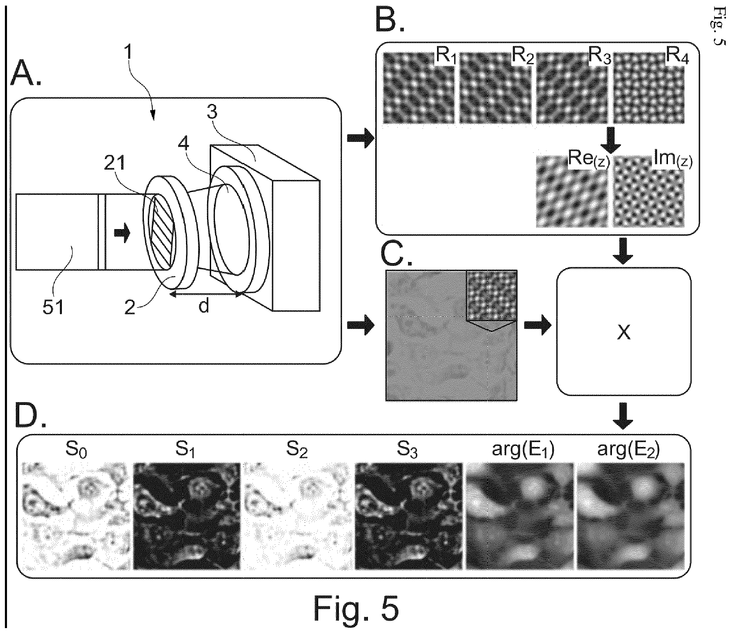

In an alternative configuration, the mask 2 is placed at a short distance d from the camera 3, as shown in Figure 5a.

The distance d between the mask 2, or its image 4, and the camera sensor 3 is a parameter that allows tuning the performances of the system. Tuning this distance d allows balancing the compromise between the sensitivity of the camera 3 on the one hand, and the spatial resolution on it. It also allows optimizing the orthogonality of intensity patterns obtained for different input polarizations.

The polarization modulating mask 2 may comprise a liquid crystal matrix 21, for example between two transparent glass covers. Liquid crystal can be aligned for instance thanks to a so-called alignment layer which may be created using a photo-sensitive aligning molecule, as described in Yaroshchuk, O. (2012). Photoalignment of liquid crystals: basics and current trends. Journal of Materials Chemistry, 2, that allows defining domains wherein the liquid crystals orientation will be uniform. The transparent covers may be made of any glass or using conductive glass such as Indium Tin Oxide (ITO). In this latter case a longitudinal electric field may be applied to the liquid crystal matrix to vary and tune the retardance of cells, potentially to optimize the performances of the mask.

The mask 2 may comprise cholesteric liquid crystals in which case each cell is associated to a circular retardance. At a fixed wavelength, the phase delay (linear and/or circular retardance) may be tuned by changing the thickness of the liquid crystal layer. For a fixed thickness, different wavelengths experience different phase delays. For such a geometry and non-cholesteric liquid crystals, an optimal linear retardance is close to $\pi/2$.

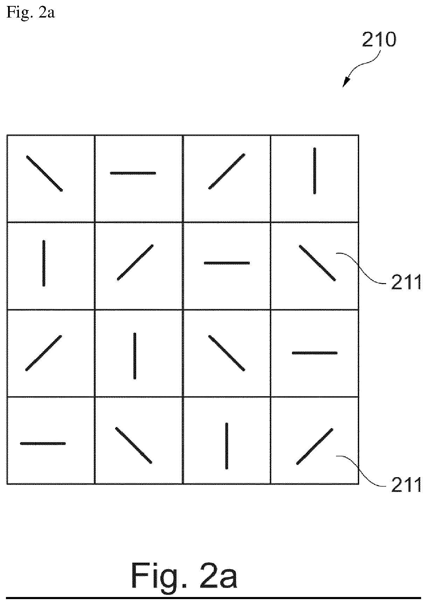

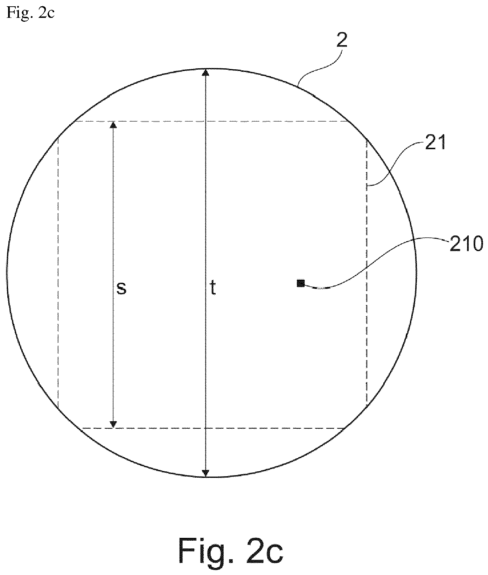

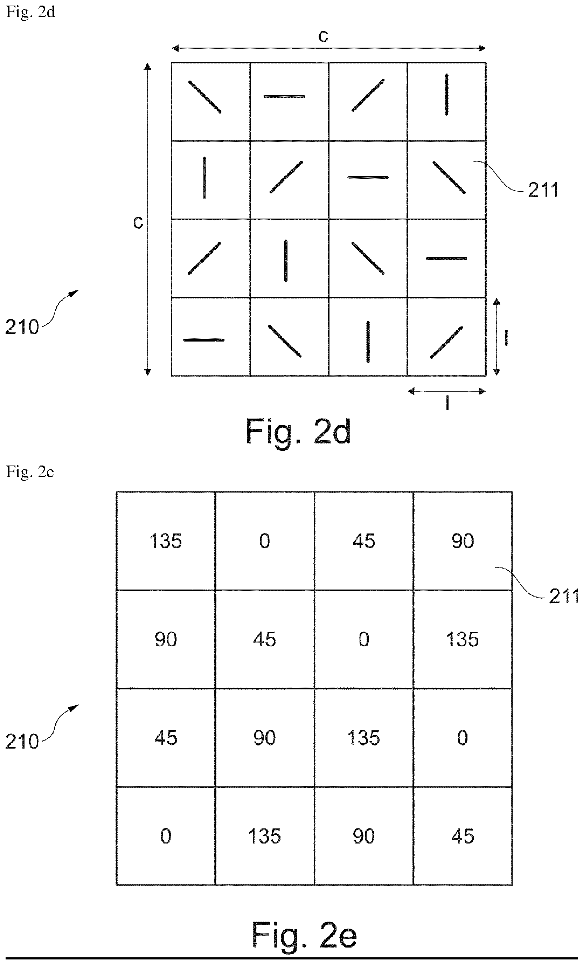

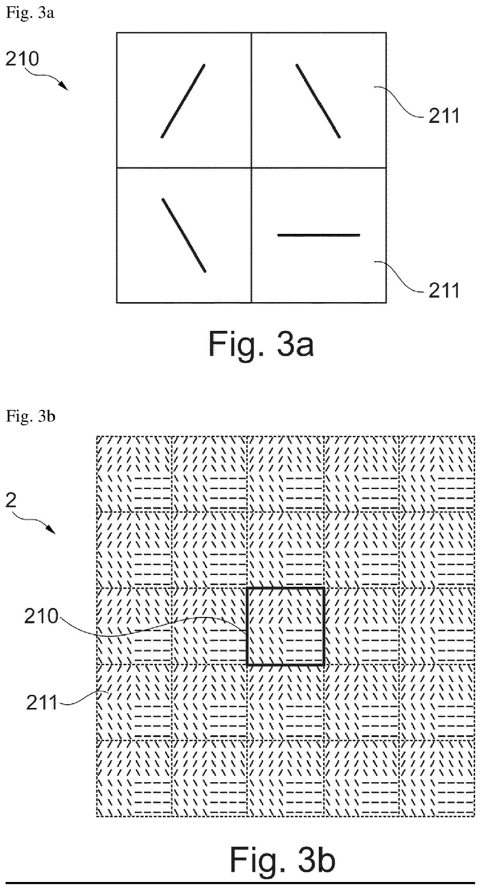

The liquid crystal matrix 21 may be a periodic lattice comprising unit cells 210, as shown in figures 2a, 2d, 2e, 3a and 3b. A unit cell 210 is made of domains 211 wherein the orientation of liquid crystals axis in each domain 210 follows the one shown by the small rods in figure 2a, 2d, 3a and 3b.

In figure 2a, the unit cell 210 is a square made of 4x4 square domains 211 all with the same retardance. The liquid crystals axis orientation alternatively rotates clockwise and counter-clockwise from one row or column to another, figure 2e displays the angle in degree of the fast axis of each domain 211.

The size c of the unit cell 210 is for instance 156 $\mu$m, and the size 1 of a domain 211 is for example 39 $\mu$m, as shown in figure 2d. The retardance of the domains 211 may be 160 nm at a wavelength of 632.8 nm. The mask 2 is for example a disk of diameter t equal to 5,08 cm and the liquid crystal matrix may be a square of size s equal to 3.81 cm.

The characteristic size of a domain 211 may correspond to at least three times the size of one camera pixel, which allows to correctly resolve the diffraction pattern on the camera 3. For example, typical sCMOS camera have a pixel pitch of 6.5 um, leading to a domain 211 of at least 19.5 um and therefore the unit cell 210 of figure 3a of at least 39 um.

For phase imaging, the resolution is dominated by the typical size of the diffraction pattern on the camera. For example, with standard camera of 2048x2048 pixels, a phase image and/or a polarization image of 682x682 pixels can be generated.

Alternatively, as shown in figures 3a and 3b, the mask 2 may be made of a periodic lattice of liquid crystals or metamaterials exhibiting linear birefringence, whose unit cell 210 is made of 2x2 domains 211, where relative fast axes orientation angles may be have orientations rotating by {+π/3 +π/3 -π/3 -π/3} radians when running around the four adjacent domains clockwise and for which the retardance may be π/2 ± π/4 rad. For instance, for relative fast axes orientation angles of π/3 rad, the linear retardance may be 1.16 × π/2 rad. In figure 3b, only 5x5-unit-cell lattice is represented but the number of unit cells of the periodic lattice may be larger.

Alternatively, a liquid crystal lattice with random orientations of the domains of the unit cell may also be used for the mask 2. The main advantage of random orientation structures is the continuous tunability of the mask-camera distance while keeping the broadband capability over the entire visible spectrum.

For specific applications like the measure of optical rotation properties or circular dichroism, the mask 2 may be optimized to increase the desired sensitivity at the cost of a reduced sensitivity for other polarization properties.

## Algorithm

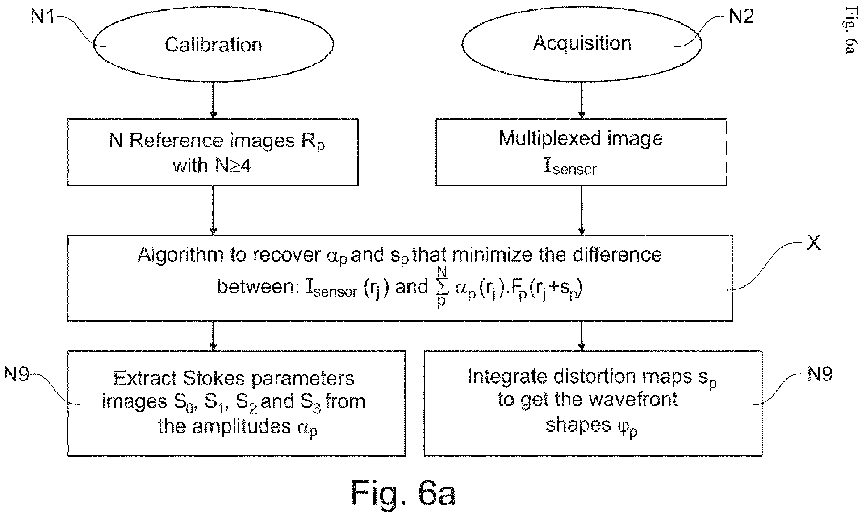

Figure 5 and 6a illustrate a method for generating data related to the polarization state and the polarization rate and to the wavefront shapes, of the incident light beam 51 of any polarization state and any polarization rate, from a single intensity image acquisition $I_{sensor}$ of the light beam, using the polarization and wavefront shape imaging system of figure 5A.

In a first step, the device is calibrated by recording at least four reference intensity patterns Rp, for example four reference intensity patterns R1, R2, R3 and R4, obtained for four specific polarization states, as shown in figure 5B.

Then, in a second step, the single intensity image $I_{sensor}$ is recorded with the same system 1 for the beam of interest 51, as shown in figure 5C, whose structure is expected to be a combination of reference intensity patterns.

The system 1 only needs to be calibrated once, and the calibration and acquisition steps can be achieved in the reverse order.

The deformation of those reference intensity patterns according to the references provides the wavefront gradient field, like in a Shack Hartmann sensor.

In a third step, the signal intensity image $I_{sensor}$ and the reference intensity images R1, R2, R3 and R4, are processed into a numerical algorithm X $I_{sensor}(r_j)$ and $\sum_{p=1}^{N} \alpha_p(r_j) R_p(r_j + s_{p,j})$ to recover the polarization weight $(\alpha_p)_{p \in [1:N]}$ and the deformation data ($s_p$).

Finally in a fourth step, the Stokes parameters $S_0$, $S_1$, $S_2$ and $S_3$ of the beam 51 are recovered from the polarization weight data $(\alpha_p)_{p \in [1:N]}$ with an algorithm involving a matrix inversion and the wavefront shapes can be computed by two-dimensional integration of the distortion data ($s_p$), as shown in figure 5D.

The algorithm X aims at measuring both the weights in each four reference channels together with the distortion maps associated with each four reference patterns.

The algorithm X described below aims at retrieving these two characteristics in a twostep "a" and "b" multi-iterative manner.

### a. Retrieving of amplitudes and Stokes parameters, after compensating pattern distortion, or neglecting them.

The mask 2 may be modelled by a polarized-resolved transmission matrix T expressed in an orthonormal basis of polarization states as: $T = \begin{bmatrix} T_{11} & T_{12} \\ T_{21} & T_{22} \end{bmatrix}$ where Tij are transmission coefficients that are functions of the position x,y on the mask.

One characteristic of these coefficients Tij is related to their spatial auto-correlation function:

$$C_{i,j}(x,y) = \iint T_{ij}(u,v)T_{ij}^{*}(u-x,v-y)dudv$$

More precisely, this function exhibits a peak with a maximum at position (x,y) = (0,0), and the important property to be considered for wavefront sensing is the dimensions of this peak. These dimensions may be quantified by measuring the full width at half maximum of the peak.

For the mask 2, there are four Cij(x,y) functions having two typical dimensions each. Here, it is considered the smallest full width at half maximum w over autocorrelations of all Tij coefficients. w is called the smallest dimension of the correlation function of transmission matrix T.

The mask 2 diffracts light with a maximum angle scaling as $\lambda$/w, which determines the spatial resolution (i.e. the phase pixel size) of the wavefront sensor then scaling as $\lambda$d/w where d is the separation distance between the mask 2, or its image, and the plane of observation of the camera 3. The smaller w, the larger the phase pixel size and the worse the spatial phase resolution. Since the intensity structures at the camera plane, of same typical size w as the mask 2, must be resolved by camera pixels, the number of camera pixels required to get one phase pixel scales is $(\lambda d/w^2)^2$. To get the highest possible resolution, a wavefront sensor should thus minimize this quantity.

When an incident electric field $E_{in}$ propagates through the mask 2, the output field $E_{out}$ is determined by the polarization resolved transmission matrix T of the mask 2 according to:

$$\begin{bmatrix} T_{11} & T_{12} \\ T_{21} & T_{22} \end{bmatrix} \begin{bmatrix} E_{,1} \\ E_{,2} \end{bmatrix} = \begin{bmatrix} E_{out.1} \\ E_{out.2} \end{bmatrix} \tag{1}$$

where $E_{in,1}$ and $E_{in,2}$ designate the electric field $E_{in}$ projection over the basis of polarization states elements.

The intensity pattern $I_{sensor}$ measured at a distance d from the birefringent phase mask, or its image, can be expressed with a free space propagation function $P_d$:

$$I_{sensor} = \left| P_d\left(E_{,1}T_{11} + E_{,2}T_{12}\right) \right|^2 + \left| P_d\left(E_{,1}T_{21} + E_{,2}T_{22}\right) \right|^2 \tag{2}$$

This expression can be simplified by introducing the four reference patterns. Experimentally, these reference patterns may be measured using vector beams with flat wavefronts, of known polarization states and normalized intensity.

Reference patterns are, for example, obtained using vectors elements $V_1 = \begin{bmatrix} 1 \\ 0 \end{bmatrix}$, $V_2 = \begin{bmatrix} 0 \\ 1 \end{bmatrix}$, $V_3 = \frac{1}{\sqrt{2}}\begin{bmatrix} 1 \\ 1 \end{bmatrix}$ and $V_4 = \frac{1}{\sqrt{2}}\begin{bmatrix} 1 \\ i \end{bmatrix}$. In the Cartesian coordinates basis (x,y) for instance, these vectors represent linearly polarization with angles 0°, 90°, 45°, and right-handed circular polarization, respectively.

Based on this chosen set of vector beams, the corresponding reference patterns are:

$$R_1 = |P_d(TV_1)|^2 = |T_{11}|^2 + |T_{21}|^2 \tag{3.1}$$

$$R_2 = |P_d(TV_2)|^2 = |T_{12}|^2 + |T_{22}|^2 \tag{3.2}$$

$$R_3 = |P_d(TV_3)|^2 = \frac{1}{2}|T_{11} + T_{12}|^2 + \frac{1}{2}|T_{21} + T_{22}|^2 \tag{3.3}$$

$$R_4 = |P_d(TV_4)|^2 = \frac{1}{2}|T_{11} + iT_{12}|^2 + \frac{1}{2}|T_{21} + iT_{22}|^2 \tag{3.4}$$

In practice, for the sake of readability of equations, it is more convenient to replace R3 and R4 and to define the complex-numbered pattern z:

$$z = T_{11}^{*}.T_{12} + T_{21}^{*}.T_{22} \qquad (3.5)$$

whose real and imaginary parts can be obtained from R3 and R4 thanks to:

$$R(z) = R_3 - \frac{1}{2}(R_1 + R_2) \qquad (3.5a)$$

$$I(z) = R_4 - \frac{1}{2}(R_1 + R_2) \qquad (3.5b)$$

R1 and R2 are the intensity patterns measured with the eigenvectors of the chosen polarization basis and z quantifies how the two polarization states elements will interfere after being mixed by the birefringent device.
Finally, for an incident vector field $E_{in}$ with negligible phase gradient, the intensity pattern can be expressed as:

$$I_{sensor} = \left|E_{,1}\right|^2 R_1 + \left|E_{,2}\right|^2 R_2 + 2\left|E_{,1}\right|.\left|E_{,2}\right|.R(z.e^{i\theta}) \qquad (4a)$$

$$I_{sensor} = \left|E_{,1}\right|^2 R_1 + \left|E_{,2}\right|^2 R_2 + 2\left|E_{,1}\right|.\left|E_{,2}\right|.\left[R(z_f).cos(\theta) + I(z_f).sin(\theta)\right] \qquad (4b)$$

with $|E_{,1}|$ and $|E_{,2}|$ the amplitudes of the incident field for each polarization stats element, and $\theta=arg(E_{,2}E_{,1}^{*})$ the phase delay between these two polarizations.
In Eq. 4b, the weights , $|E_{,1}|^2$, $|E_{,2}|^2$, $2|E_{,1}||E_{,2}|cos(\theta)$ and $2|E_{,1}||E_{,2}|sin(\theta)$ of the contribution to R1, R2, $R(z)$, and $I(z)$, respectively, may be obtained by using a cross-correlation product if the four reference patterns are perfectly orthonormal. Preferentially, a least square minimization algorithm may be used.
Once the weights of the contributions to R1, R2, $R(z)$, and $I(z)$, in Eq. 4b, are obtained, the Stokes parameters S0, S1, S2 and S3 may be computed.
For instance, if the basis is the canonical basis, i.e. $E_{,1}$ is the field projection along x and $E_{,2}$ the field projection along y, then the relation between $E_{,1}$, $E_{,2}$, $\theta$ on the one hand, and S0, S1, S2 and S3 on the other hand is:

$$S_0 = \left|E_{,1}\right|^2 + \left|E_{,2}\right|^2 \qquad (5a)$$

$$S_1 = \left|E_{,1}\right|^2 - \left|E_{,2}\right|^2 \qquad (5b)$$

$$S_2 = 2\left|E_{,1}\right|.\left|E_{,2}\right|cos(\theta) \qquad (5c)$$

$$S_3 = 2\left|E_{,1}\right|.\left|E_{,2}\right|sin(\theta) \qquad (5d)$$

Alternatively, another example is the case of a basis consisting in two circular polarization vectors. In this case, Stokes parameters are obtained according to:

$$S_0 = \left|E_{,1}\right|^2 + \left|E_{,2}\right|^2 \qquad (6a)$$

$$S_1 = 2|E_{,1}|.|E_{,2}|cos(\theta) \tag{6b}$$

$$S_2 = -2|E_{,1}|.|E_{,2}|sin(\theta) \tag{6c}$$

$$S_3 = |E_{,1}|^2 - |E_{,2}|^2 \tag{6d}$$

For a partially polarized beam, the intensity at the detector may be written:

$$I_{sensor} = \frac{S_0}{2}.I_{unpo} + \frac{S_1}{2}.(I_0 - I_{90}) + \frac{S_2}{2}.(I_{45} - I_{-45}) + \frac{S_3}{2}.(I_r - I_l)$$

with $I_{unpo}$ the pattern obtained on the camera with an unpolarized beam (S0=1; S 1=S2=S3 =0), $I_0$, $I_{90}$, $I_{45}$ and $I_{-45}$ respectively the patterns obtained with a linear polarization oriented at 0, 90, 45 and -45 degrees, $I_r$ and $I_l$ the pattern obtained with the two circular polarizations.

b. Retrieving of distortion maps, assuming Stokes parameters are known from "a"

For distorted wavefronts, the patterns may also be distorted. In the Fresnel approximation and within the angular memory effect of the birefringent device, the measured intensity pattern $I_{sensor}$ may be assumed to be locally translated by an amount proportional to the local wavefront gradient. The intensity at the detector is then:

$$I_{sensor} = |E_{,1}|^2.R_1(\vec{r} - \vec{s_1}) + |E_{,2}|^2.R_2(\vec{r} - \vec{s_2}) + 2|E_{,1}|.|E_{,2}|.R(z_f.e^{i\theta})$$

$$\tag{7a}$$

$$I_{sensor} = |E_{,1}|^2.R_1(\vec{r} - \vec{s_1}) + |E_{,2}|^2.R_2(\vec{r} - \vec{s_2}) + 2|E_{,1}|.|E_{,2}|.[R(z_f).cos(\theta) +$$

$$I(z_f).sin(\theta)] \tag{7b}$$

where $\vec{s_1} = \frac{d}{k}\overrightarrow{\nabla\varphi_1}$ and $\vec{s_2} = \frac{d}{k}\overrightarrow{\nabla\varphi_2}$ are the distortion maps of the patterns, proportional to the gradient of the spatial phase $\overrightarrow{\nabla\varphi_1}$ and $\overrightarrow{\nabla\varphi_2}$ of $E_{,1}$ and $E_{,2}$ respectively, k being the wavenumber of the beam and d the distance between the mask 2, or its image, and the camera sensor 3.

The gradient of the phase for each polarization and $z_f$ can then be approximated at first order Taylor expansion by:

$$z_f = z + \frac{d}{k}\overrightarrow{\nabla\varphi_1}.(\overrightarrow{\nabla T_{11}}.T_{12}^* + \overrightarrow{\nabla T_{21}}.T_{22}^*) + \frac{d}{k}\overrightarrow{\nabla\varphi_2}.(\overrightarrow{\nabla T_{12}}.T_{11}^* + \overrightarrow{\nabla T_{22}}.T_{21}^*) \tag{8}$$

The unknown coherent vector field can be measured from the diffraction pattern $I_{sensor}$ measured in the camera 3 at a distance from the phase mask 2, or its image, if the relevant parameters $|E_{,1}|$, $|E_{,2}|$, $\overrightarrow{\nabla\varphi_1}$, $\overrightarrow{\nabla\varphi_2}$ and $\theta = \varphi_2-\varphi_1$ can be extracted from equation (7a).

Algorithm X is run by iteratively applying steps a and b above, which means:

a. recovering $|E_{,1}|$, $|E_{,2}|$ and $\theta$ with a least square minimization,

b. recovering $\overrightarrow{\nabla\varphi_1}$ and $\overrightarrow{\nabla\varphi_2}$, or equivalently distortion maps $\vec{s_1}$ and $\vec{s_2}$, with registration algorithms.

Other algorithms than those presented here may also be used in the family of convolutional or model-based neuronal networks. Algorithms based on non-rigid pattern recognition rather than least square minimization may also be used.

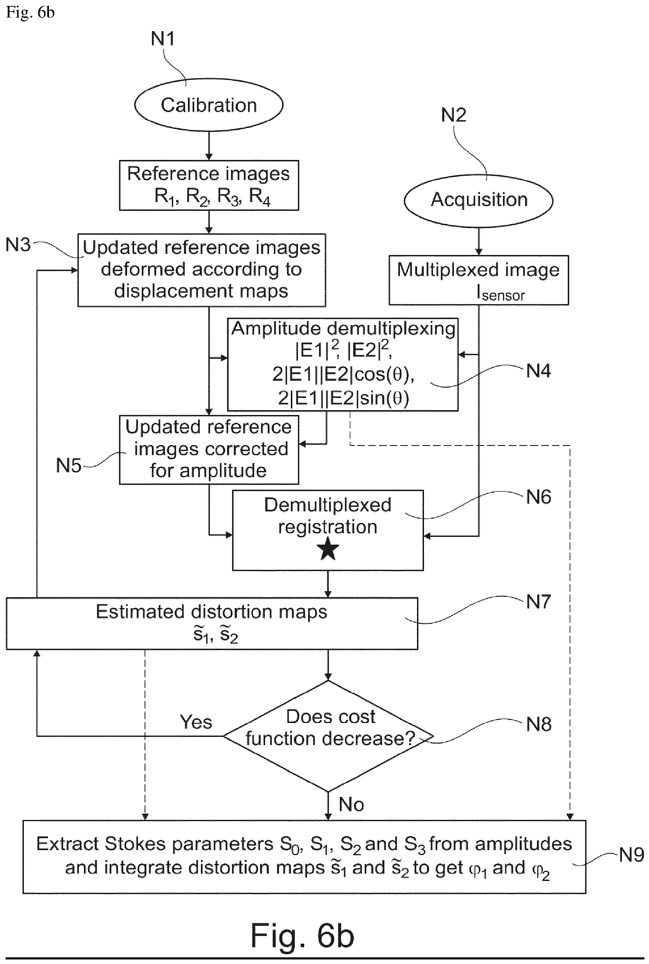

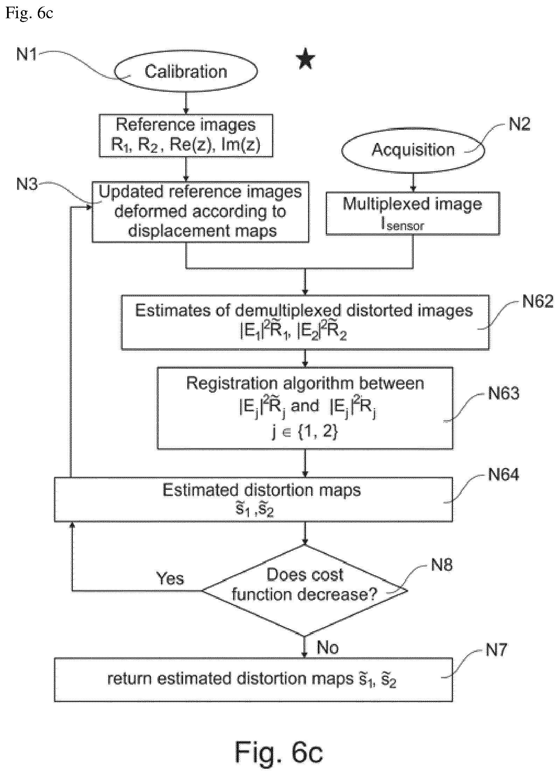

The detailed workflows of algorithm X are presented in figure 6b and 6c.

At the first iteration, the wavefront gradient, and thus distortion maps $\overrightarrow{s_1}$ and $\overrightarrow{s_2}$ , are assumed to be zero, and the set of equations 5a, 5b, 5c and 5d may be solved at each pixel assuming close neighbouring pixels have the same solution thanks to a pseudoinverse matrix operation.

A first estimate of $|E_{,1}|$, $|E_{,2}|$ and $\theta$ may then be obtained in step N4, after the acquisition of reference images in step N1 and the acquisition of $I_{sensor}$ in step N2. With these estimates, weighted reference images $|E_{,j}|^2 . R_j$ may be generated in step N5 by multiplying reference images by the intensity estimated in each polarization state associated with each corresponding reference beam. These updated reference images are necessary to properly estimate the distortion maps.

Next, at each iteration an estimate of $R_1(\vec{r}\text{-}\vec{s_1})$ and $R_2(\vec{r}\text{-}\vec{s_2})$,called $\tilde{R}_1$ and $\tilde{R}_2$, may be generated in step N6, more precisely in sub step N62, by subtracting the other contributions according to equations:

$$\left|E_{,1}\right|^2 . \mathcal{R}_1 = I_{sensor} - \left|E_{,2}\right|^2 . R_2(\vec{r} - \overrightarrow{s_2}) - 2\left|E_{,1}\right|.\left|E_{,2}\right|.\left[R(z_f).cos(\theta) + I(z_f).sin(\theta)\right] \qquad (9a)$$

$$\left|E_{,2}\right|^2 . \mathcal{R}_2 = I_{sensor} - \left|E_{,1}\right|^2 . R_1(\vec{r} - \overrightarrow{s_1}) - 2\left|E_{,1}\right|.\left|E_{,2}\right|.\left[R(z_f).cos(\theta) + I(z_f).sin(\theta)\right] \qquad (9b)$$

where $\overrightarrow{s_1}$ and $\overrightarrow{s_2}$ are distortion maps estimated at the former iteration.

A new estimate of $\overrightarrow{s_1}$ and $\overrightarrow{s_2}$ can then be obtained in step N64 assuming that $\tilde{R}_j = R_j(\vec{r} - \overrightarrow{s_j})$ based on a non-rigid registration algorithm applied to $|E_{,j}|^2 . \tilde{R}_j$ and $|E_{,j}|^2 . R_j$ in step N63. Noteworthy, the two other reference patterns R (z) and $I(z)$ may also be registered according to estimated distortion maps $\overrightarrow{s_1}$ and $\overrightarrow{s_2}$ but in practice, this operation may be unnecessary for small enough distortions.

Finally, this process is iterating by updating the amplitudes and phases at each iteration in steps N3 and N5.

At each iteration, a cost function is computed to check whether Eq. 7 is satisfied in step N8.

The Stokes parameters may finally be reconstructed in step N9 from recovering $|E_{,1}|$, $|E_{,2}|$ and $\theta$ using the appropriate equations depending on the polarization basis chosen.

Furthermore, spatial phase gradients $\overrightarrow{\nabla\varphi_1} = \frac{k}{d}\overrightarrow{s_1}$ and $\overrightarrow{\nabla\varphi_2} = \frac{k}{d}\overrightarrow{s_2}$ are numerically integrated to get the spatial phases $\varphi_1$ and $\varphi_2$ of $E_{in,1}$ and $E_{in,2}$.

As a second possible reconstruction algorithm, both $|E_{,1}|$, $|E_{,2}|$, $\theta$ and $\overrightarrow{\nabla\varphi_1}$ and $\overrightarrow{\nabla\varphi_2}$ (or equivalently $\overrightarrow{s_1}$ and $\overrightarrow{s_2}$ ) may be directly recovered by a least-square minimization based on a first order Taylor expansion of Eq. 7b (for small displacements) involving the gradients of the reference intensity patterns. The fact that the auto-correlation matrix between both reference intensity patterns, and their respective gradient maps be invertible, ensure the unicity of the reconstruction.

In a nutshell either in the case of a fully polarized or a partially polarized beam, the pattern $I_{sensor}$ at the camera plane can be expressed as a linear combination of reference intensity patterns deformed by displacement vector maps $s_p$:

$$I_{sensor}(r_j) = \sum_{p=1}^{4} \alpha_p(r_j) F_p(r_j + s_{p,j})$$

with F$_p$ meaning F$_1$ to F$_4$ functions defined below:

$$F_1 = R_1, F_2 = R_2, F_3 = R(z), F_4 = I(z)$$

which can be simplified with a first order Taylor expansion for small enough displacements amplitudes of s$_{p,j}$:

$$I_{sensor}(r_j) = \sum_{p=1}^{4} \alpha_p(r_j)[F_p(r_j) + s_{p,j} \cdot \nabla F_p(r_j)]$$

which can be written:

$$I_{sensor}(r_j) = \sum_{p=1}^{12} \alpha_p(r_j) F_p(r_j)$$

with :
$F_5 = \partial_x R_1 \; F_6 = \partial_x R_2 \; F_7 = \partial_x R(z) \; F_8 = \partial_x I(z)$
$F_9 = \partial_y R_1 \; F_{10} = \partial_y R_2 \; F_{11} = \partial_y R(z) \; F_{12} = \partial_y I(z)$

A reconstruction algorithm, shown in figure 6a, thus consists in minimizing the following Lagrangian:

$$L = \sum_j \left| I_{sensor}(r_j) - \sum_{p=1}^{4} \alpha_p(r_j) F_p(r_j + s_{p,j}) \right|^2$$

which can be approximated by minimizing:

$$L = \sum_j \left| I_{sensor}(r_j) - \sum_{p=1}^{12} \alpha_p(r_j) F_p(r_j) \right|^2$$

where, the summation over j is performed over a set of camera pixels, corresponding for example to the size of four domains.

The reconstruction metric presented above is a squared 2-norm. Alternatively, it may be also the 2-norm only, or the 1-norm or some other norms. Alternatively, a deep learning algorithm like a convolutional neuronal network may also be trained to recover Stokes parameters and wavefronts from experimental data. Although parameters of the neuronal network are typically optimized by minimizing a 2-norm over a big set of data, the minimization achieved on a single set of experimental data might have any proper norm definition.

According to previous notations, $\alpha_p$ are defined in the following way:

$$\alpha_1 = \left|E_{,1}\right|^2 \qquad \alpha_2 = \left|E_{,2}\right|^2 \qquad \alpha_3 = 2\left|E_{,1}\right|\left|E_{,2}\right|^2 cos\theta$$

$$\alpha_5 = -\left|E_{,1}\right|^2 \partial_x R_1 \cdot s_{1,x} \quad \alpha_6 = -\left|E_{,2}\right|^2 \partial_x R_2 \cdot s_{1,x} \qquad \alpha_4 = 2\left|E_{,1}\right|\left|E_{,2}\right|^2 sin\theta$$

$$\alpha_9 = -\left|E_{,1}\right|^2 \partial_y R_1 \cdot s_{1,y} \quad \alpha_{10} = -\left|E_{,2}\right|^2 \partial_y R_2 \cdot s_{1,y}$$

$\alpha_j$ or $j \in \{7,8,11,12\}$ having complicated expressions that are not essential for the reconstruction.

**Results**

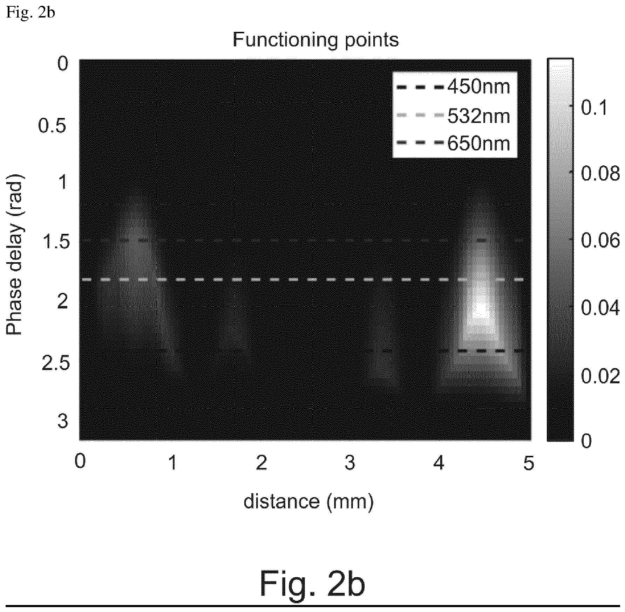

In figures 2b, 3c and 4, the ratio of the minimum eigenvalue over the maximum one of the 12x12 auto-correlation

$$C_L = \left( \left\langle F_i \middle| F_j \right\rangle_{L,G} \right)_{(i,j) \in [\![1,12]\!]}$$

matrix constructed from both the reference intensity patterns and their respective intensity gradient maps, is computed as a function of the distance d and the uniform phase delay induced by the liquid crystal, to assess the capability of the system 1 of performing polarization reconstruction, respectively if the system comprises the mask 2 of figure 2a, the mask 2 of the figures 3b and in a system comprising a polarization modulating mask with random orientations of the domains 211.

In figure 2b, four regions appears where this ratio is not negligible for various distances d, around 700mm, 1500m, 3500mm and 4500mm, which implies that it is possible to tune the sensitivity of the wavefront sensing capability with the same mask 2.

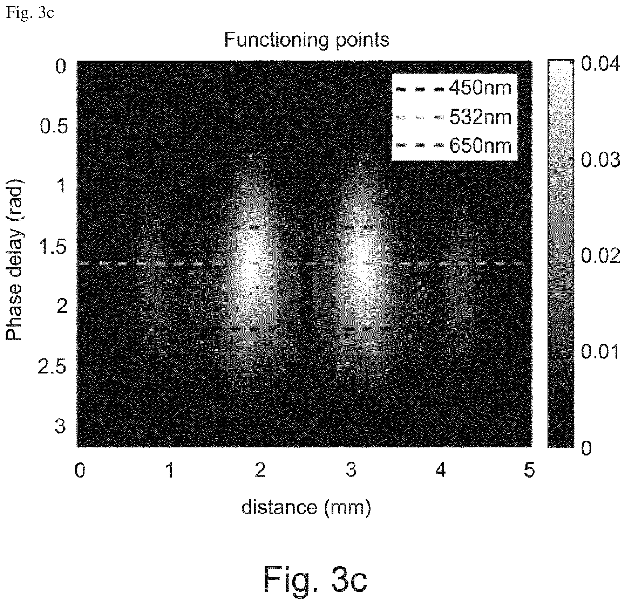

In figure 3c, four regions appears where this ratio is not negligible for various distances d, around 850mm, 2000m, 3300mm and 4400mm, which implies that it is possible to tune the sensitivity of the wavefront sensing capability with the same mask 2.

With a retardance thickness of 158 nm for the liquid crystal layer, which corresponds to a quarter-wavelength retardation for wavelength of 632nm, the system 1 with the mask of figure 2a, or the mask of figure 3c, can simultaneously work over the entire visible range as illustrated by the three doted lines, corresponding to wavelengths 450 nm, 532 nm and 650 nm, on the functioning point graph.

The patterns of the unit cells 210 showed in figure 2a and 3c, are therefore suitable for uniform phase retardance.

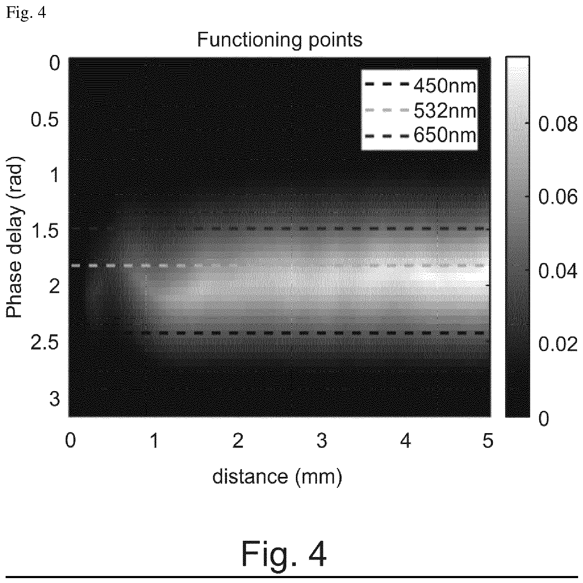

In figure 4, a random polarization modulating mask 2 with a liquid crystal thickness of 150nm was used. The figure shows that the price to pay for random orientations of the domains 211 is a small loss in resolution to ensure the local orthogonality of the four reference patterns.

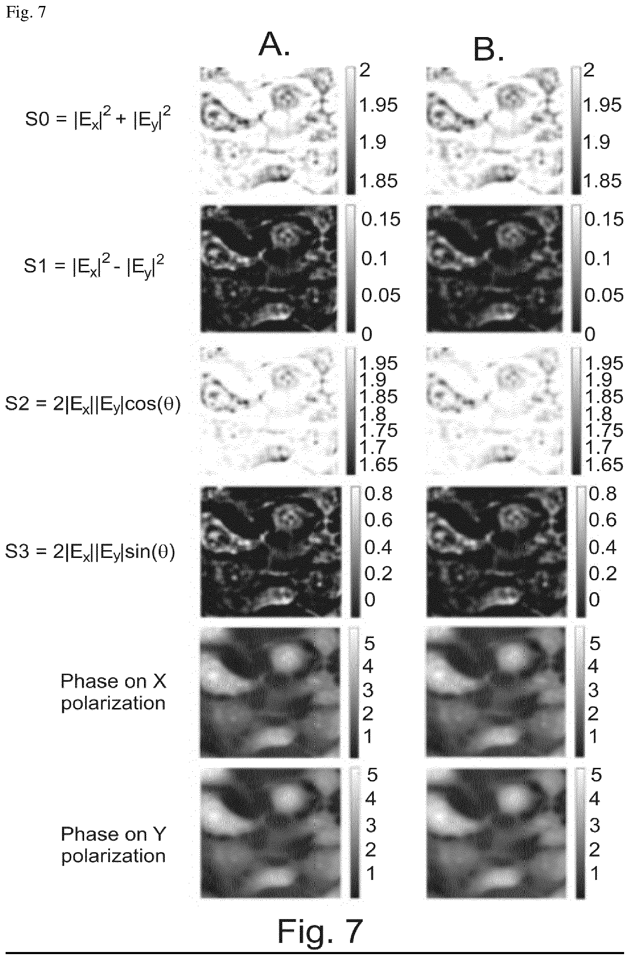

Figure 7 shows simulations results with the mask of figure 2a. Birefringent cells are generated numerically based on experimental real high resolution phase images. The images in column B are images reconstructed with the algorithm described above. The numerically generated images are shown in column A for comparison.

The reconstructed images of column B appears to be almost identical to the true images of column A, showing that the reconstruction algorithm described above allows retrieving the Stokes parameters and the phases of an incident light beam for samples such that biological cells.

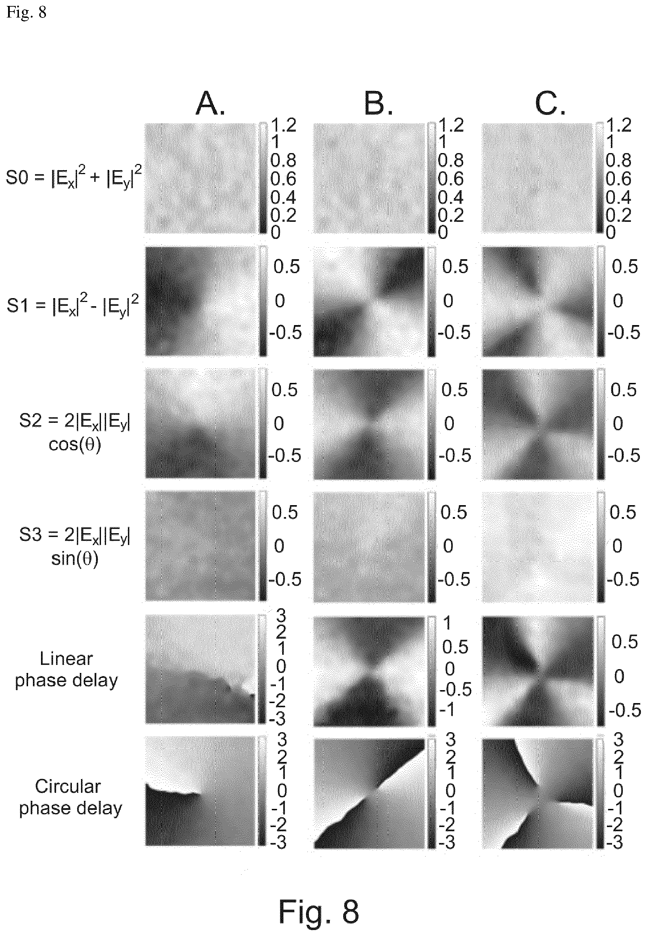

Figure 8 shows experimental results obtained with the system 1 of figure 1. It shows polarization images of liquid crystal Q-plates. The polarization modulating mask 2 used in the experiment is a thin layer of white paint. Three Q-plates with topological charges equal to ½, 1 and 3/2 are imaged in polarization and phase with the system 1, respectively in columns A, B and C.

One can observe that the images of first line, S0, and the fourth line, S3, are quite homogeneous. S0 represents the measured intensity of the whole light beam and S3 represents the intensity of the circularly polarized light from the whole light beam. These two intensities are supposed to be almost homogeneous. The reconstruction allows then to compute right Stokes parameter S0 and S3.

**Comparative example**

Table 1 below shows a comparison between the polarization modulating mask 2 of figures 2a to 2e and the meta surface mask acting as an array of polarized-dependent microlens of article Yang, Z., Wang, Z., Wang, Y. et al. Generalized Hartmann-Shack array of dielectric metalens sub-arrays for polarimetric beam profiling. Nat Commun 9, 4607 (2018).

Table 1

| | Polarization modulating mask 2 (figure 2a to 2e) | Meta surface mask acting as an array of polarized-dependent micro-lens |
|---|---|---|
| Smallest dimension w (um) of auto-correlation functions of the coefficients of the polarization-resolved transmission or reflection matrix T | 39 | $\lambda/(2NA) = 2.34$ |
| Wavelength $\lambda$ (um) | 0.532 | 1.5 |
| Distance d (um) | 5000 | 30 |
| Rayleigh range $z_R = \pi w^2/\lambda$ (um) | 9000 | 11.5 |
| minimal number of required camera pixel per phase and polarization pixel $\lambda d/w^2)^2$ | 3 | 67.1 |

The mask 2 is working in the visible spectral range where the camera 3 is the most efficient and has the largest number of pixels, while the meta surface mask is working in the infrared domain.

The meta surface mask splits the impinging beam into beamlets, each beamlet passing through a meta micro-lens. The number of camera pixels, 67.1, per sampling point is then very high because the distance between each sampling point equals the size of microlenses. In comparison, the mask 2 does not split the beam into beamlets in the plane of study, it spreads the light energy over the full camera surface, so optimizing the spatial density of sampling point and thus the spatial resolution of the phase and polarimetric images : the number of camera pixel per sampling point is 3.

**Interferometer**

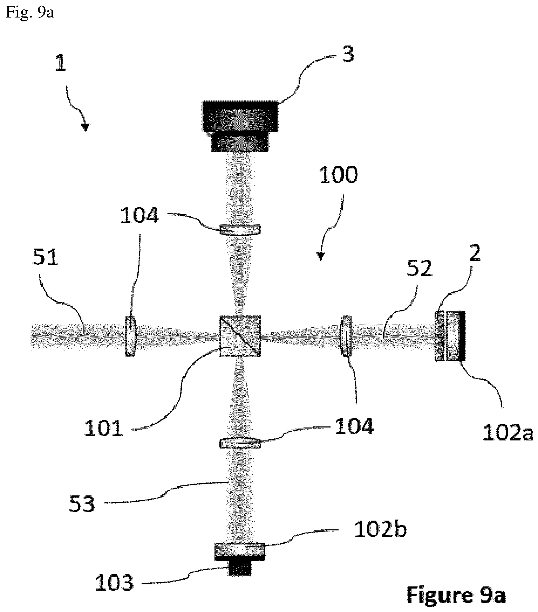

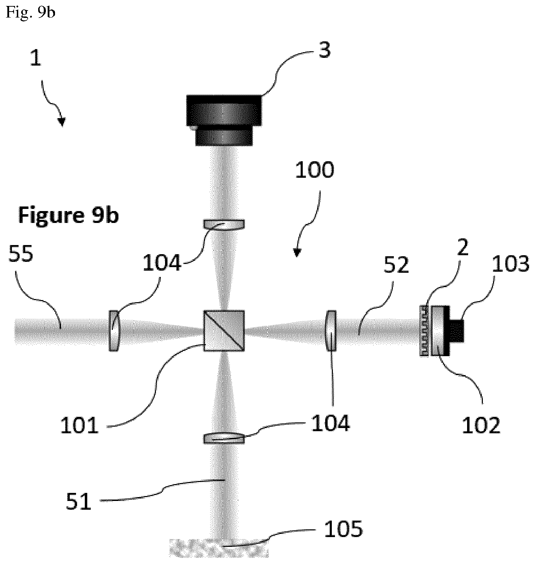

In figures 9a and 9b, the polarization and wavefront shape imaging system 1 comprises a Linnik interferometer 100, an intensity camera sensor 3 and a polarization modulating mask 2 inside the interferometer 100.

The Linnik interferometer 100 of figure 9a comprises a beam-splitter 101, two mirrors 102a and 102b, one piezo-electric translation stage 103 and a set of lenses 104.

The beam-splitter 101 splits the incident light beam 51 into two parts 52 and 53. One part 52 of the beam is sent onto the polarization modulating mask 2 and reflected onto a first mirror 102a; the second part 53 is reflected onto a second mirror 102b. The two parts 52 and 53 of the beam are then recombined with the same beam-splitter 101 and sent onto the intensity sensor camera 3. The polarization modulating mask 2 is imaged at a distance d, for example at a distance equal to zero, from the intensity sensor camera 3 using the set of lenses 104. Preferentially, the first mirror 102a is close to the polarization modulating mask 2.

The Linnik interferometer 100 of figure 9b comprises a beam-splitter 101, a mirror 102, a piezo-electric translation stage 103, a set of lenses 104 and a reflecting and/or backscattering sample 105.

The beam-splitter 101 splits a beam 55 into two parts 51 and 52. One part 51 of the beam illuminates the sample 105 to be characterized. The second part 52 illuminates the mirror 102. The beam 51 that is reflected and/or backscattered by the sample 105 is the incident light beam 51 and is recombined with the other part 52 of the beam using the same beam-splitter 101 and sent onto the intensity sensor camera 3. In this implementation, reference intensity patterns $I_{sensor}$ are recorded by changing the sample 105, for instance by moving it, or replacing it by a back reflecting mirror. This implementation is an improvement of an optical coherence tomographer (OCT), where the use of a light source with low temporal coherence typically allows obtaining images with axial optical sectioning. In this specific implementation, polarization and phase resolved OCT images will be obtained with optical sectioning ability. Optical sectioning is referring to the ability of an optical instrument to image only one transverse plane of a thick sample, in general the focal plane of an imaging lens, by suppressing information coming from out-of-focus regions of the sample.

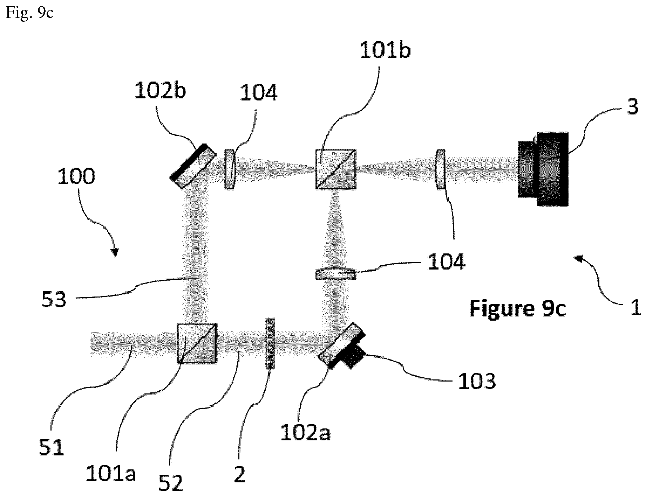

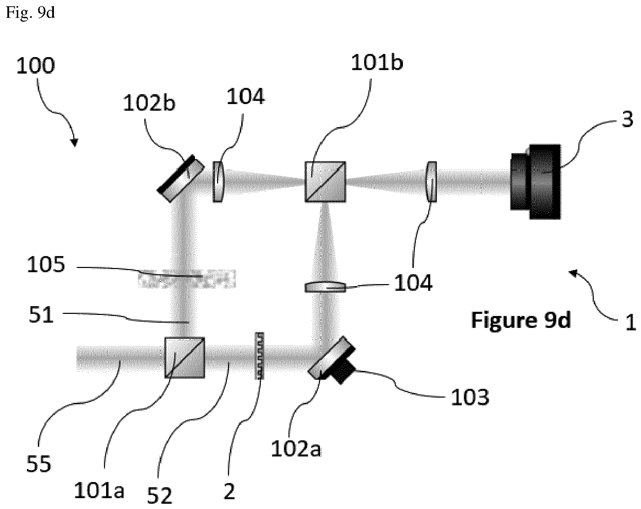

In figures 9c and 9d, the polarization and wavefront shape imaging system 1 comprises a Mach-Zehnder interferometer 100, an intensity camera sensor 3 and a polarization modulating mask 2 inside the interferometer 100.

The Mach-Zehnder interferometer of figures 9c and 9d comprise two beam-splitters 101a and 101b, two mirrors 102a and 102b, one piezo-electric translation stage 103 and a set of lenses 104.

In figure 9c, a first beam-splitter 101a splits the incident light beam 51 into two parts 52 and 53. One part 52 of the beam goes through the polarization modulating mask 2. The two parts 52 and 53 of the incident light beam are then recombined using a second beam-splitter 101b before reaching the intensity sensor camera 3. The polarization modulating mask 2 is imaged at a distance d, for example at a distance equal to zero, from the intensity sensor camera 3 using a set of lenses 104.

In figure 9d, a beam 55 is split into two parts 51 and 52 using a beam splitter 101a. One part 51 of the beam is transmitted through a sample 105 to be characterized. The other part 52 illuminates a mirror 102a. The part 51 of the beam crossing the sample 105 is the incident light beam 51 and is recombined with the other part 52 of the beam using a second beam-splitter 101b, and sent onto the intensity sensor camera 3. In this implementation, reference intensity patterns $I_{sensor}$ are recorded by changing the sample 105, for instance by moving it, or by removing it, or by replacing it with another optical element. In this configuration, the use of a light source with low temporal coherence allows obtaining polarized images with axial optical sectioning.

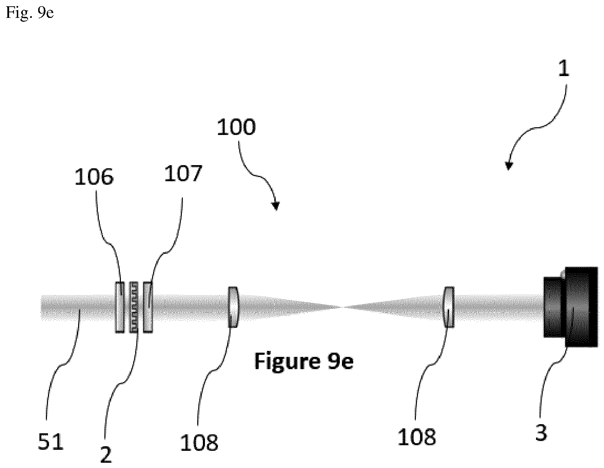

In figure 9e, the polarization and wavefront shape imaging system 1 comprises a Fabry-Perot interferometer 100, an intensity camera sensor 3 and a polarization modulating mask 2 inside the interferometer 100.

The Fabry-Perot interferometer 100 comprises two partially reflecting mirrors 106 and 107. The optical assembly composed of the polarization modulating mask 2 and the two mirrors 106 and 107 is imaged at a distance d from the intensity sensor camera 3 with a relay lens system 108. The advantage of this implementation is to be more compact that former implementations and to allow placing the optical assembly composed of the mask 2 and the two mirrors 106 and 107 in a plane conjugate to the intensity sensor camera 3 to potentially improve the spatial resolution of polarization and/or phase images.

## Claims

1. A method for generating data related at least to the polarization state and the polarization rate, and advantageously to the wavefront shapes, of an incident light beam (51) of any polarization state and any polarization rate,

   from a single intensity image acquisition $I_{sensor}$ of said light beam (51),
   using a polarization and wavefront shape imaging system (1) which comprises a polarization modulating mask (2) and an intensity sensor camera (3):

   • the polarization modulating mask (2) being a diffractive optical element having:

   - a polarization-resolved transmission or reflection matrix T,
   - the property to generate interference patterns between any two cross-polarized impinging beams, at several planes transverse to the propagation axis, the several transverse planes lying at several working distances (d) from said polarization modulating mask (2),
   the interference patterns so depending on the two respective amplitudes and the relative phase of said two cross-polarized impinging beams,
   - the property to generate at least one set of four reference intensity patterns, at least at one working distance (d) from the polarization modulation mask (2), when illuminated by four respective impinging reference light beams, the four impinging reference light beams having polarization states defining all together a tetrahedron of non-zero volume when represented on the polarization Poincaré sphere,

   each said set of four reference intensity patterns forming a Stokes parameters image basis, meaning that the auto-correlation matrix $C_L = \left( \left\langle R_i | R_j \right\rangle_{L,G} \right)_{(i,j) \in [\![1,4]\!]}$ of the corresponding four reference intensity patterns is invertible,
   $R_i$ being the reference intensity pattern of polarization state i,

   • the intensity sensor camera (3) being placed downstream from said polarization modulating mask (2) for recording the intensity image $I_{sensor}$ of the incident light beam (51), at least a part of which having preferentially been reflected by or transmitted through the polarization modulating mask (2),
   said intensity image $I_{sensor}$ lying at any of the several of said working distances (d) from the polarization modulating mask (2),

   the method comprising :

   (A) having previously recorded one set of at least four reference intensity patterns (N1) with the intensity sensor camera (3) of the imaging system, the reference intensity patterns being formed at one given of said working distances (d) from the polarization modulating mask (2),

each reference intensity pattern having been generated by a respective impinging reference light beam of known wavefront shape, known polarization rate, and known polarization state,
the polarization states of the impinging reference light beams defining all together a polyhedron of non-zero volume when represented on the polarization Poincaré sphere and reference intensity patterns defining a Stokes parameters image basis at the working distance (d),
thus allowing the determination of the full polarization state of the impinging light beam,

(B) recording the single intensity image $I_{sensor}$ of said incident light beam (51) with the intensity camera sensor (3), the single intensity image being formed at the same given working distance (d) from the polarization modulating mask (2),
(C) processing the single intensity image $I_{sensor}$ based on the reference intensity patterns to generate the data related to the polarization state and the polarization rate, and advantageously to the wavefront shapes of the incident light beam (51).

2. Method according to claim 1, wherein the intensity sensor camera (3) is placed so that the intensity image $I_{sensor}$ is lying at a working distance (d) shorter than $\pi w^2 / \lambda_{average}$, $\lambda_{average}$ being the average wavelength of the incident light beam (51) and w being a smallest dimension of auto-correlation functions of the coefficients of the polarization-resolved transmission or reflection matrix T, one auto-correlation function being computed per coefficient.

3. Method according to claim 1 or 2, wherein the intensity sensor camera (3) comprises a pixilated surface, at least one subset of four reference intensity patterns among the at least four reference intensity patterns having the property to generate an invertible auto-correlation matrix $C_L$, the auto-correlation matrix being computed over at least one macropixel containing 20x20 camera pixels or less, advantageously 12x12 camera pixels or less, advantageously 6x6 camera pixels or less.

4. Method according to anyone of the preceding claims, wherein the polarization modulating mask (2) is configured to cause the intensity image $I_{sensor}$ to depend on the wavefront shape of the incident light beam (51),
a tilt applied to the wavefront shape resulting in a displacement amount of the intensity image $I_{sensor}$.

5. Method according to anyone of the preceding claims, wherein the set of reference intensity patterns comprises N reference intensity patterns $(R_p)_{p \in [1:N]}$, N being larger than or equal to 4,
the step (C) comprising :

(C.1) computing polarization weights data $A = (\alpha_p)_{p \in [1:N]}$ and deformation data $(s_p)$ of each given reference intensity pattern, for the single intensity image $I_{sensor}$, by running a reconstruction algorithm minimizing the

difference between $I_{sensor}(r_j)$ and $\sum_{p=1}^{N} \alpha_p(r_j) R_p(r_j + s_{p,j})$ .

j being a given camera pixel of the intensity sensor camera (3), $r_j$ being said pixel coordinate at the camera sensing plane, $F_p$ being the reference pattern of polarization state p,
$s_p$ being a deformation data representing the amount of relative displacement of the pattern $R_p$, $s_{p,j}$ being proportional to the wavefront gradient of the fraction of signal light beam having polarization state p, the polarization weights data $\alpha_p(r)$ and deformation data $s_{p,j}$ being representative of a polarization state and a diffeomorphism, respectively, and

(C.2) calculating the Stokes parameters and the spatial phase of the incident light beam (51) from the polarization weights data $(\alpha_p)$ and deformation data $(s_p)$.

6. Method according to the preceding claim, wherein N reference intensity patterns $R = (R_p)_{p \in [1:N]}$, N being larger than or equal to 4, are generated by N respective impinging reference light beams having any N known polarization states defining all together a polyhedron of non-zero volume when represented on the polarization Poincaré sphere, the polarization state of the N impinging reference light beams having known respective Stokes vector representations $SR = (SR_p)_{p \in [1:N]}$,

the step (C.2) comprising:

(C.2.1) Computing a measurement matrix W relating the Stokes vector representation of the impinging reference light beams to their corresponding reference intensity patterns according to the matrix equation: R = W × SR

(C.2.2) computing a Stokes parameter vector image S of the incident light beam (51) from the single intensity image $I_{sensor}$ by inverting the matrix equation $W \times S = I_{sensor}$ or from the the polarization weight data $A = (\alpha_p)_{p \in [1:N]}$ by inverting the matrix equation: $W \times S = R \times A$.

7. Method according to any of the preceding claims, wherein a wavefront shape $\varphi_p$ associated with a polarization state p is rebuilt thanks to a two-dimensional integration of the vector fields $$\overrightarrow{\nabla \varphi_p} = \frac{2\pi}{d\lambda_{average}} \overrightarrow{s_p}$$ , wherein $s_p$ is the deformation data expressed as a displacement amount at the camera plane, d is the separation distance between the polarization modulating mask (2), or its image, and the single intensity image $I_{sensor}$ of the impinging light beam, and $\lambda_{average}$ is the average wavelength of the impinging light beam (51).

8. Method according to any one of the preceding claims, wherein the polarization modulating mask (2) has the property to generate several sets of four reference intensity patterns at respective several working distances (d) from the polarization modulating mask (2), when illuminated by four respective impinging reference light beams, one set of four reference intensity patterns per working distance,

the four impinging reference light beams having polarization states defining all together a tetrahedron of non-zero volume when represented on the polarization Poincaré sphere,
and each said set of four reference intensity patterns forming a Stokes parameters image basis, meaning that the auto-correlation matrix $C_L$ of the corresponding four reference intensity patterns is invertible,
so allowing the working distance (d) to be changed to improve sensitivity to weak wavefront deformations, and/or to improve spatial resolution, and/or to maximize the orthogonality of the four reference intensity patterns, notably by maximizing the minimum eigen-value of an auto-correlation matrix $C_L$ involving all reference intensity patterns.

9. Method according to anyone of the preceding claims, wherein the polarization modulating mask (2) comprises a birefringent diffraction grating (21) consisting in a periodic lattice based on an unit cell (210), notably a two-dimensional periodic lattice, advantageously with a unit cell (210) being a square cell.

10. Method according to any one of the preceding claims, wherein the polarization modulating mask (2) comprises a diffractive optical element made of a plurality of polarization modulating domains (211), each polarization modulating domain (211) having a uniform polarization-resolved matrix over said polarization modulating domain, the polarization modulating domains (211) being notably randomly arranged or periodically arranged in a lattice (21) in the polarization modulating mask (2).

11. Method according to the preceding claim 9, wherein each unit cell (210) comprises four square adjacent polarization modulating domains (211) arranged in rows and columns, the four square adjacent polarization modulating domains (211) having preferentially a linear retardance of $\pi/2 \pm \pi/4$ radians and a relative fast axes orientations rotating by {+π/3 +π/3 -π/3 -π/3} radians when running around the four adjacent domains clockwise or counter-clockwise, the tolerance on fast-axes orientations being $\pm \pi/6$ rad.

12. Method according to anyone of the preceding claims, wherein the polarization modulating mask (2) has the property that the four reference intensity patterns generated at the working distance (d), each with their respective two gradient component patterns, define together a basis of 12 patterns, meaning that the 12x12 elements auto-correlation matrix

$$C_L = \left( \left\langle F_i | F_j \right\rangle_{L,G} \right)_{(i,j) \in [\![1,12]\!]}$$ constructed over at least one macropixel of both the reference intensity patterns and their respective intensity gradient maps be invertible.

13. Method according to anyone of the preceding claims, wherein the polarization modulating mask (2) is configured so that $e_{min}/e_{max}$ is greater than 1.5% better than 1%, wherein $e_{min}$ and $e_{max}$ are respectively the smallest and the

$$C_L = \left( \langle F_i | F_j \rangle_{L,G} \right)_{(i,j) \in [\![1,12]\!]}$$

largest eigen-values of the auto-correlation matrix constructed from both the reference intensity patterns and their respective intensity gradient maps.

14. Method according to any one of the preceding claims, wherein the polarization modulating mask (2) comprises chiral and/or non-chiral liquid crystals, each liquid crystal being **characterized by** its alignment.

15. Method according to the preceding claim, wherein the polarization modulating mask (2) is configured to allow the alignment or the position of the liquid crystals to be modified by applying an external voltage, a local and/or a global temperature change, and/or any non-linear optical process.

16. Method according to anyone of the preceding claims, wherein the polarization modulating mask (2) is optimized using the following algorithm:

i. recording four reference intensity patterns $R_1$, $R_2$, $R_3$, and $R_4$ with the polarization and wavefront shape imaging system (1), each reference intensity pattern being generated by a respective impinging light beam, the four impinging reference light beams having flat wavefronts, normalised intensity and known polarization states represented respectively in the Cartesian coordinates basis by the Jones vectors $V_1 = \begin{bmatrix} 1 \\ 0 \end{bmatrix}$, $V_2 = \begin{bmatrix} 0 \\ 1 \end{bmatrix}$,

$V_3 = \frac{1}{\sqrt{2}} \begin{bmatrix} 1 \\ 1 \end{bmatrix}$ and $V_4 = \frac{1}{\sqrt{2}} \begin{bmatrix} 1 \\ i \end{bmatrix}$, or equivalently, corresponding to the Stokes vectors $SF_1 = \begin{pmatrix} 1 \\ 1 \\ 0 \\ 0 \end{pmatrix}$,

$SF_2 = \begin{pmatrix} 1 \\ -1 \\ 0 \\ 0 \end{pmatrix}$, $SF_3 = \begin{pmatrix} 1 \\ 0 \\ 1 \\ 0 \end{pmatrix}$, $SF_4 = \begin{pmatrix} 1 \\ 0 \\ 0 \\ 1 \end{pmatrix}$,

ii. Calculating the matrix $C_L = \left( \langle F_i | F_j \rangle_{L,G} \right)_{(i,j) \in [\![1,12]\!]}$, $C_L = \left( \langle F_i | F_j \rangle_{L,G} \right)_{(i,j) \in [\![1,12]\!]}$ being the auto-correlation matrix constructed from both the reference intensity patterns and their respective gradients, with:

$$\begin{array}{llll} F_1 = R_1 & F_2 = R_2 & F_3 = R(z) & F_4 = I(z) \\ F_5 = \partial_x R_1 & F_6 = \partial_x R_2 & F_7 = \partial_x R(z) & F_8 = \partial_x I(z) \\ F_9 = \partial_y R_1 & F_{10} = \partial_y R_2 & F_{11} = \partial_y R(z) & F_{12} = \partial_y I(z) \end{array}$$, with:

$$R(z) = R_3 - \frac{1}{2}(R_1 + R_2)$$ and $$I(z) = R_4 - \frac{1}{2}(R_1 + R_2)$$; where $R_p$ is the reference intensity pattern recorded for the reference intensity light beam of vector $V_p$, $P_d$ being a free space propagation function and T being the polarized-resolved transmission or reflection matrix of the depolarizing mask (2), and

iii. If $C_L$ is not invertible or if the ratio of eigen-values $e_{min}/e_{max}$ of $C_L$ is smaller than 1.5% or 1%, modifying the polarized-resolved matrix of the polarization modulating mask and repeating steps i. and ii..

17. Method according to any one of the preceding claims, , the polarization modulating mask being inside an interferometer, preferably a Linnik interferometer, a Mach-Zehnder interferometer, or a Fabry-Perot interferometer, upstream of the intensity sensor camera.

18. A polarization and wavefront shape imaging system (1) for generating data related at least to the polarization state and the polarization rate, and advantageously to the wavefront shapes, of an incident light beam (51) of any polarization state and any polarization rate,

from a single intensity image acquisition $I_{sensor}$ of said light beam (51),
which comprises:

- a polarization modulating mask (2) being a diffractive optical element having:

    - a polarization-resolved transmission or reflection matrix T, and
    - the property to generate interference patterns between any two cross-polarized impinging beams, at several planes transverse to the propagation axis, the several transverse planes lying at several working distances (d) from said polarization modulating mask (2),
    the interference patterns so depending on the two respective amplitudes and the relative phase of said two cross-polarized impinging beams, and
    - the property to generate at least one set of four reference intensity patterns, at least at one working distance (d) from the polarization modulation mask (2), when illuminated by four respective impinging reference light beams, one set of four reference intensity patterns per working distance,

        the four impinging reference light beams having polarization states defining all together a tetrahedron of non-zero volume when represented on the polarization Poincaré sphere,
        and each said set of four reference intensity patterns forming a Stokes parameters image basis, meaning that the auto-correlation matrix $C_L = \left( \left\langle R_i | R_j \right\rangle_{L,G} \right)_{(i,j) \in [\![1,4]\!]}$ of the corresponding four reference intensity patterns is invertible,
        Ri being the reference pattern of polarization state i,

- an intensity sensor camera (3) being placed downstream from said polarization modulating mask (2) for recording the intensity image $I_{sensor}$ of the incident light beam (51), at least a part of which having preferentially been reflected by or transmitted through the polarization modulating mask (2), said intensity image $I_{sensor}$ lying at any of the several of said working distances (d) from the polarization modulating mask (2),
- storage and computing means for :

    (a) recording one set of at least four reference intensity patterns with the intensity sensor camera (3) of the imaging system (1), the reference intensity patterns being formed at one given of said working distances (d) from the polarization modulating mask (2),

        each reference intensity pattern having been generated by a respective impinging reference light beam of known wavefront shape, known non-zero polarization rate, and known polarization state, the polarization states of the impinging reference light beams defining all together a polyhedron of non-zero volume when represented on the polarization Poincaré sphere and reference intensity patterns defining a Stokes parameters image basis at the working distance (d), thus allowing the determination of the full polarization state of the incident light beam,

    (b) recording the single intensity image $I_{sensor}$ of said incident light beam (51) with the intensity camera sensor (3), the single intensity image $I_{sensor}$ being formed at the same given working distance (d) from the polarization modulating mask (2),
    (c) processing the single intensity image $I_{sensor}$ based on the reference intensity patterns to generate the data related to the polarization state and the polarization rate, and advantageously to the wavefront shapes of the incident light beam (51).

19. System according to the preceding claim, wherein the intensity sensor camera (3) comprises a pixilated surface, at least one subset of four reference intensity patterns among the at least four reference intensity patterns having the property to generate an invertible auto-correlation matrix $C_L$, the auto-correlation matrix being computed over at least one macropixel containing less than 20x20 camera pixels, better less than 12x12 camera pixels, better less than 6x6 camera pixels.

20. System according to claims 18 or 19, wherein the set of reference intensity patterns comprises N reference intensity patterns $(R_p)_{p \in [1:N]}$, N being larger than or equal to 4,
the storage and computing means are configured for in the step (c):

(c.1) computing polarization weights data $A = (\alpha_p)_{p\in[1:n]}$ and deformation data $(s_p)$ of each given reference intensity pattern, for the single intensity image, by running a reconstruction algorithm minimizing the difference between $I_{sensor}(r_j)$ and $\sum_{p=1}^{n} \alpha_p(r_j) R_p(r_j + s_{p,j})$.

j being a given camera pixel of the intensity sensor camera, $r_j$ being said pixel coordinate at the camera sensing plane, $R_p$ being the reference pattern of polarization state p,

$s_p$ being a deformation data representing the amount of relative displacement of the pattern $R_p$, $s_p$ being proportional to the wavefront gradient of the fraction of signal light beam having polarization state p, the polarization weights data $\alpha_p(r)$ and deformation data $s_p$ being representative of a polarization state and a diffeomorphism, respectively, and

(c.2) calculating the Stokes parameters and the spatial phase of the incident light beam (51) from the polarization weights data $(\alpha_p)$ and deformation data $(s_p)$.

21. System according to any one of claims 18 to 20, wherein the polarization modulating mask (2) comprises a diffraction grating (21) consisting in a periodic lattice based on an unit cell (210), for instance a two-dimensional periodic lattice, in particular the unit cell (210) is a square cell, in particular each unit cell (210) comprising four adjacent polarization modulating domains (211) arranged in rows and columns.

22. System according to any one of claims 18 to 21, wherein the polarization modulating mask (2) comprises a plurality of polarization modulating domains (211), each polarization modulating domain (2211) having a uniform polarization-resolved matrix over said polarization modulating domain (211), the polarization modulating domains (211) being for instance randomly arranged or periodically arranged in a lattice (21) in the polarization modulating mask.

23. System according to claim 21 or 22, wherein each unit cell (210) comprising four square adjacent polarization modulating domains (211) arranged in rows and columns, the four adjacent polarization modulating domains (211) having preferentially a linear retardance of $\pi/2 \pm \pi/4$ rad and relative fast axes orientations rotating by {$+\pi/3 +\pi/3 -\pi/3 -\pi/3$} radians when running around the four adjacent domains (211) clockwise or counter-clockwise, the tolerance on fast-axes orientations being $\pm \pi/6$ rad.

24. System according to any one of claims 18 to 23, wherein the polarization modulating mask (2) comprises - chiral and/or non-chiral liquid crystals, each liquid crystal being **characterized by** its alignment.

25. A polarization modulating mask (2) comprising a diffraction grating (21) consisting in a periodic two-dimensional lattice based on a unit cell (210) comprising a plurality of depolarizing domains (211), the unit cell (210) comprising four adjacent polarization modulating domains (211) arranged in rows and columns, the four adjacent polarization modulating domains (211) having a linear retardance of $\pi/2 \pm \pi/4$ rad and their relative fast axes orientations rotate by {$+\pi/3 +\pi/3 -\pi/3 -\pi/3$} radians when running around the four adjacent domains (211) clockwise or counter-clockwise, the tolerance on fast-axes orientations being $\pm \pi/6$ rad.

26. Use of the system (1) according to any preceding claims 18-24, in any one of the following applications : polarization imaging, phase imaging, fluorescence imaging, super-resolution fluorescence microscopy, back-scattering imaging, to record phase and/or polarimetric images of a sample, so providing information about the molecular and/or structural organization of the sample.

Fig. 1

Fig. 1

Fig. 2a

210

211

211

# Fig. 2a

Fig. 2b

Fig. 2b

Fig. 2c

Fig. 2c

Fig. 2d

Fig. 2d

Fig. 2e

Fig. 2e

Fig. 3a

210

211

211

# Fig. 3a

Fig. 3b

2

210

211

# Fig. 3b

Fig. 3c

Fig. 3c

Fig. 4

Fig. 4

Fig. 5

Fig. 5

Fig. 6a

N1 — Calibration

N2 — Acquisition

N Reference images $R_p$ with $N \geq 4$

Multiplexed image $I_{sensor}$

Algorithm to recover $\alpha_p$ and $s_p$ that minimize the difference between: $I_{sensor}(r_j)$ and $\sum\limits_{p}^{N} \alpha_p(r_j).F_p(r_j+s_p)$  — X

N9 — Extract Stokes parameters images $S_0$, $S_1$, $S_2$ and $S_3$ from the amplitudes $\alpha_p$

Integrate distortion maps $s_p$ to get the wavefront shapes $\varphi_p$ — N9

Fig. 6a

Fig. 6b

Fig. 6b

Fig. 6c

Fig. 6c

Fig. 7

$$S0 = |E_x|^2 + |E_y|^2$$

$$S1 = |E_x|^2 - |E_y|^2$$

$$S2 = 2|E_x||E_y|\cos(\theta)$$

$$S3 = 2|E_x||E_y|\sin(\theta)$$

Phase on X polarization

Phase on Y polarization

Fig. 7

Fig. 8

A.  B.  C.

$S0 = |E_x|^2 + |E_y|^2$

$S1 = |E_x|^2 - |E_y|^2$

$S2 = 2|E_x||E_y| \cos(\theta)$

$S3 = 2|E_x||E_y| \sin(\theta)$

Linear phase delay

Circular phase delay

Fig. 8

Fig. 9a

Figure 9a

Fig. 9b

Figure 9b

Fig. 9c

**Figure 9c**

Fig. 9d

**Figure 9d**

Fig. 9e

Figure 9e

Europäisches
Patentamt

European
Patent Office

Office européen
des brevets

## EUROPEAN SEARCH REPORT

Application Number

EP 23 30 5117

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/078298 A1 (KUDENOV MICHAEL W [US] ET AL) 20 March 2014 (2014-03-20) | 1-6, 8-15, 17-25 | INV. G01J9/02 G01J4/04 |
| Y | * figures 1,4A,8A,8B,9,12-16,24A,24B * * paragraphs [0101], [0107] - [0118], | 1,5-7, 18,20 | |
| A | [0127] * | 16 | |
| X | WO 02/33346 A1 (UNIV ILLINOIS [US]) 25 April 2002 (2002-04-25) | 1-6,8, 12,13, 18-20 | |
| Y | * figures 1,2,7,13,14b,17,22-24 * * page 4, line 2 - page 5, line 10 * | 1,5,6, 18,20 | |
| A | * page 9, line 22 - page 16, line 2 * * page 20, line 6 - line 13 * * page 24, line 1 - page 29, line 24 * * page 30, line 14 - line 25 * * page 46, line 3 - page 50, line 7 * * page 51, line 14 - page 52, line 21 * | 16 | |
| X | WO 2023/004143 A1 (HARVARD COLLEGE [US]) 26 January 2023 (2023-01-26) | 25 | |
| Y | * paragraphs [0054], [0062], [0075], [0079] - [0083]; figure 5A * | 1,18 | TECHNICAL FIELDS SEARCHED (IPC) G01J |
| Y | US 2003/103214 A1 (VANDELDEN JAY S [US]) 5 June 2003 (2003-06-05) * paragraphs [0193] - [0202] * | 1,18 | |

-/--

The present search report has been drawn up for all claims

| Place of search | Date of completion of the search | Examiner |
|---|---|---|
| Munich | 7 December 2023 | Jacquin, Jérôme |

EPO FORM 1503 03.82 (P04C01)

Europäisches
Patentamt

European
Patent Office

Office européen
des brevets

# EUROPEAN SEARCH REPORT

Application Number

EP 23 30 5117

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Azzam R. ET AL: "General analysis and optimization of the four-detector photopolarimeter", Journal of the Optical Society of America. A, Optics and image science, 1 January 1988 (1988-01-01), pages 681-689, XP093108986, Washington, DC Retrieved from the Internet: URL:https://citeseerx.ist.psu.edu/document?repid=rep1&type=pdf&doi=85d5e05fa19a36e32f9106e68924eb410567a71a [retrieved on 2023-12-05] * page 8 * | 1,18 | |
| Y | EP 3 974 792 A1 (UNIV PARIS [FR]; CENTRE NAT RECH SCIENT [FR] ET AL.) 30 March 2022 (2022-03-30) * paragraphs [0010], [0063] - [0078] * | 5,6,20 | |
| Y | EP 3 715 805 A1 (UNIV PARIS DESCARTES [FR]; UNIV SORBONNE [FR] ET AL.) 30 September 2020 (2020-09-30) * paragraphs [0009], [0056] - [0060], [0094] - [0106] * | 5,6,20 | TECHNICAL FIELDS SEARCHED (IPC) |
| X | WO 2020/214615 A1 (HARVARD COLLEGE [US]) 22 October 2020 (2020-10-22) * figure 7 * * paragraphs [0064], [0065], [0078], [0079], [0128] * | 25 | |
| Y | EP 3 951 338 A1 (UNIV PARIS [FR]; CENTRE NAT RECH SCIENT [FR] ET AL.) 9 February 2022 (2022-02-09) * the whole document * | 7 | |

The present search report has been drawn up for all claims

| Place of search | Date of completion of the search | Examiner |
|---|---|---|
| Munich | 7 December 2023 | Jacquin, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## EP 4 407 287 A1

### ANNEX TO THE EUROPEAN SEARCH REPORT
### ON EUROPEAN PATENT APPLICATION NO.

EP 23 30 5117

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2023

| Patent document cited in search report | | Publication date | Patent family member(s) | | Publication date |
|---|---|---|---|---|---|
| US 2014078298 | A1 | 20-03-2014 | NONE | | |
| WO 0233346 | A1 | 25-04-2002 | AU | 1343802 A | 29-04-2002 |
| | | | EP | 1332331 A1 | 06-08-2003 |
| | | | TW | 530150 B | 01-05-2003 |
| | | | US | 6639683 B1 | 28-10-2003 |
| | | | WO | 0233346 A1 | 25-04-2002 |
| WO 2023004143 | A1 | 26-01-2023 | NONE | | |
| US 2003103214 | A1 | 05-06-2003 | NONE | | |
| EP 3974792 | A1 | 30-03-2022 | EP | 3974792 A1 | 30-03-2022 |
| | | | US | 2022099499 A1 | 31-03-2022 |
| EP 3715805 | A1 | 30-09-2020 | EP | 3715805 A1 | 30-09-2020 |
| | | | EP | 3948191 A1 | 09-02-2022 |
| | | | US | 2022178760 A1 | 09-06-2022 |
| | | | WO | 2020193032 A1 | 01-10-2020 |
| WO 2020214615 | A1 | 22-10-2020 | CN | 113906320 A | 07-01-2022 |
| | | | EP | 3956702 A1 | 23-02-2022 |
| | | | US | 2022206205 A1 | 30-06-2022 |
| | | | WO | 2020214615 A1 | 22-10-2020 |
| EP 3951338 | A1 | 09-02-2022 | EP | 3951338 A1 | 09-02-2022 |
| | | | EP | 4193133 A1 | 14-06-2023 |
| | | | US | 2023296444 A1 | 21-09-2023 |
| | | | WO | 2022028922 A1 | 10-02-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 20305898 A
- EP 20705986 A

- EP 20306121 A

### Non-patent literature cited in the description

- **IGNATENKO, D.** Applications of Mueller Matrix Polarimetry to Biological and Agricultural Diagnostics: A Review. *Appl. Sci.,* 2022, vol. 12 (10), 5258
- **AKNOUN, S.** quantitative retardance imaging of biological samples using quadriwave lateral shearing interferometry. *Optics Express,* 2015, vol. 23 (12), 16383-16406
- **SHABAN, H.A. ; VALADES-CRUZ, C.A. ; SAVATIER, J.** Polarized super-resolution structural imaging inside amyloid fibrils using Thioflavine T. *Sci Rep,* 2017, vol. 7, 12482
- **MASSOUMIAN, F.** Quantitative polarized light microscopy. *Journal of Microscopy,* 2003, vol. 209 (1
- **RAMELLA-ROMAN, J.** A review of polarization-based imaging technologies for clinical and preclinical applications. *Journal of Optics,* 2020, vol. 22 (12
- **DAI, X.** Quantitative Jones matrix imaging using vectorial Fourier ptychography. *Biomedical Optics Express,* 2022, vol. 13 (3), 1457-1470

- **SONG, S.** Large-Area, High-Resolution Birefringence Imaging with Polarization-Sensitive Fourier Ptychographic Microscopy. *ACS Photonics,* 2021, vol. 8 (1), 158-165
- **CHERQUI, S.** The renal Fanconi syndrome in cystinosis: pathogenic insights and therapeutic perspectives. *Nat Rev Nephrol.,* 2017, vol. 13 (2), 115-131
- **YANG, Z. ; WANG, Z. ; WANG, Y. et al.** Generalized Hartmann-Shack array of dielectric metalens sub-arrays for polarimetric beam profiling. *Nat Commun,* 2018, vol. 9, 4607
- **LEE, K.** Interpreting Intensity Speckle as the Coherency Matrix of Classical Light. *Phys. Rev. Applied,* 2019, vol. 12 (2
- **YAROSHCHUK, O.** Photoalignment of liquid crystals: basics and current trends. *Journal of Materials Chemistry,* 2012, vol. 2
- **YANG, Z. ; WANG, Z. ; WANG, Y. et al.** Generalized Hartmann-Shack array of dielectric metalens sub-arrays for polarimetric beam profiling. *Nat Commun,* 2018, vol. 9, 4607